(19) Europäisches Patentamt
European Patent Office
Office européen des brevets

(11) **EP 4 761 430 A1**

(12) **EUROPEAN PATENT APPLICATION**
published in accordance with Art. 153(4) EPC

(43) Date of publication:
**17.06.2026 Bulletin 2026/25**

(21) Application number: **23948709.3**

(22) Date of filing: **11.08.2023**

(51) International Patent Classification (IPC):
**H04W 72/231** (2023.01)

(52) Cooperative Patent Classification (CPC):
**H04W 72/231**

(86) International application number:
**PCT/CN2023/112562**

(87) International publication number:
**WO 2025/035267 (20.02.2025 Gazette 2025/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **1FINITY Inc.**
**Kawasaki-shi, Kanagawa 211-8588 (JP)**

(72) Inventors:
• ZHU, Jing
  **Beijing 100022 (CN)**
• ZHANG, Lei
  **Beijing 100022 (CN)**
• LI, Guorong
  **Beijing 100022 (CN)**

(74) Representative: **Haseltine Lake Kempner LLP**
**Cheapside House**
**138 Cheapside**
**London EC2V 6BJ (GB)**

(54) **METHOD AND APPARATUS FOR INDICATING CHANNEL STATE INFORMATION REPORTING CONFIGURATION**

(57) Provided in embodiments of the present application are a method and an apparatus for indicating a channel state information (CSI) report configuration. The method includes: a terminal equipment receives first information from a network device, the first information at least including L sub-configurations of a CSI report configuration, and one of the L sub-configurations corresponding to one piece of CSI; the terminal equipment receives second information from the network device, the second information being at least used for indicating and/or triggering and/or activating at least one of the L sub-configurations.

401

> a terminal equipment receives first information from a network device, the first information at least including L sub-configurations of a CSI reporting configuration, and one of the L sub-configurations corresponding to one piece of CSI

402

> the terminal equipment receives second information from the network device, the second information being at least used for indicating and/or triggering and/or activating at least one of the L sub-configurations

**Fig. 4**

**Description**

TECHNICAL FIELD

Embodiments of the present application relate to the field of communications technologies.

BACKGROUND

With the popularization of 5G in various industries and its application in more geographical areas, in order to handle more advanced services, very high data rates and denser networks are required, as well as the use of more antennas, larger bandwidth, and more frequency bands. As a result, the energy consumption of 5G devices is becoming increasingly high. According to telecom operator's data statistics, the average energy consumption of a 5G base station exceeds three times that of an LTE base station, and nearly 50% of the cost of deploying 5G networks for the telecom operator is electricity expenses. More importantly, even during periods of no business, 5G base stations still incur significant energy consumption costs. Therefore, network energy saving is of great significance for improving environmental sustainability, reducing environmental impact (such as reducing greenhouse gas emissions), and saving operating costs. Thus, 5G network energy saving is an urgent problem to be solved.

In order to achieve network energy saving, Rel-18 has initiated research on various energy-saving technologies related to network energy saving. In the discussion, network energy-saving technologies may be divided into types such as time-domain/frequency-domain/spatial-domain/energy-domain energy saving. Spatial-domain energy saving is achieved by for example dynamically adjusting the number of antennas, energy-domain energy saving is achieved by for example dynamically adjusting data transmission power, time-domain energy saving is achieved by for example introducing cell DTX/DRX technologies, and so on.

It should be noted that, the above introduction to the background is merely for the convenience of clear and complete description of the technical solution of the present application, and for the convenience of understanding of persons skilled in the art. It cannot be regarded that the above technical solution is commonly known to persons skilled in the art just because that the solution has been set forth in the background of the present application.

SUMMARY

However, the inventor finds that some scenarios of wireless communication applications, such as energy-saving mode, may have negative impacts. For example, when a network device dynamically adjusts the number of antennas or the transmission power, it may be possible to cause changes in the corresponding channel, resulting in inaccurate or untimely reporting of channel state information (CSI) from a terminal equipment, ultimately affecting transmission performance. How the network device configures and/or indicates CSI reporting to the terminal equipment is currently a key problem that needs to be solved.

To address at least one of the above problems, embodiments of the present application provide a method and an apparatus for indicating a channel state information report configuration.

According to an aspect of embodiments of the present application, there is provided with a method for indicating a channel state information (CSI) report configuration, including:

a terminal equipment receives first information from a network device, the first information at least including L sub-configurations of a CSI report configuration, and one of the L sub-configurations corresponding to one piece of CSI; and

the terminal equipment receives second information from the network device, the second information being at least used for indicating and/or triggering and/or activating at least one of the L sub-configurations.

According to another aspect of embodiments of the present application, there is provided with an apparatus for indicating a channel state information (CSI) report configuration, including:

a first receiving unit configured to receive first information from a network device, the first information at least including L sub-configurations of a CSI report configuration, and one of the L sub-configurations corresponding to one piece of CSI; and

a second receiving unit configured to receive second information from the network device, the second information being at least used for indicating and/or triggering and/or activating at least one of the L sub-configurations.

According to another aspect of embodiments of the present application, there is provided with a method for indicating a channel state information (CSI) report configuration, including:

a network device transmits first information to a terminal equipment, the first information at least including L sub-configurations of a CSI report configuration, and one of the L sub-configurations corresponding to one piece of CSI; and

the network device transmits second information to the terminal equipment, the second information being at least used for indicating and/or triggering and/or activating at least one of the L sub-configurations.

According to another aspect of embodiments of the present application, there is provided with an apparatus for indicating a channel state information (CSI) report configuration, including:

a first transmitting unit configured to transmit first information to a terminal equipment, the first information at least including L sub-configurations of a CSI report configuration, and one of the L sub-configurations corresponding to one piece of CSI; and

a second transmitting unit configured to transmit second information to the terminal equipment, the second information being at least used for indicating and/or triggering and/or activating at least one of the L sub-configurations.

According to another aspect of the embodiment of the present application, there is provided with a communication system, including:

a network device configured to transmit first information, the first information at least including L sub-configurations of a channel state information (CSI) report configuration, and one of the L sub-configurations corresponding to one piece of CSI; and transmit second information, the second information being at least used for indicating and/or triggering and/or activating at least one of the L sub-configurations; and

a terminal equipment configured to receive the first information and/or the second information.

One of the beneficial effects of the embodiments of the present application is that even in some scenarios of wireless communication applications (such as an energy-saving mode), the network device may efficiently and accurately indicate the CSI report configuration of the terminal equipment, CSI reporting overhead and uplink resources may be saved.

With reference to the specification and drawings below, a specific embodiment of the present application is disclosed in detail, which specifies the manner in which the principle of the present application can be adopted. It should be understood that, the scope of the embodiment of the present application is not limited. Within the scope of the spirit and clause of the appended claims, the embodiment of the present application includes many variations, modifications and equivalents.

The features described and/or shown for one embodiment can be used in one or more other embodiments in the same or similar manner, can be combined with the features in other embodiments or replace the features in other embodiments.

It should be emphasized that, the term "include/comprise" refers to, when being used in the text, existence of features, parts, steps or assemblies, without exclusion of existence or attachment of one or more other features, parts, steps or assemblies.

BRIEF DESCRIPTION OF THE DRAWINGS

Elements and features described in one of the drawings or embodiments of the present application may be combined with the elements and features shown in one or more other drawings or embodiments. Moreover, in the drawings, similar reference signs indicate corresponding parts in several drawings and may be used to indicate corresponding parts used in more than one embodiment.

FIG. 1 is a schematic diagram of a communication system in an embodiment of the present application;
FIG. 2 is a schematic diagram of a SP-CSI on PUCCH activation/deactivation MAC CE;
FIG. 3 is a schematic diagram of adjusting spatial-domain/energy-domain elements;
FIG. 4 is a schematic diagram of a method for indicating a channel state information report configuration in an embodiment of the present application;
FIG. 5 is an example diagram of an MAC CE in an embodiment of the present application;
FIG. 6 is another example diagram of an MAC CE in an embodiment of the present application;
FIG. 7 is another example diagram of an MAC CE in an embodiment of the present application;
FIG. 8 is another example diagram of an MAC CE in an embodiment of the present application;
FIG. 9 is another example diagram of an MAC CE in an embodiment of the present application;

FIG. 10 is another example diagram of an MAC CE in an embodiment of the present application;

FIG. 11 is another example diagram of an MAC CE in an embodiment of the present application;

FIG. 12 is a schematic diagram of a method for indicating a channel state information report configuration in an embodiment of the present application;

FIG. 13 is a schematic diagram of an apparatus for indicating a channel state information report configuration in an embodiment of the present application;

FIG. 14 is a schematic diagram of an apparatus for indicating a channel state information report configuration in an embodiment of the present application;

FIG. 15 is a schematic diagram of a network device in an embodiment of the present application; and

FIG. 16 is a schematic diagram of a terminal equipment in an embodiment of the present application.

## DETAILED DESCRIPTION

With reference to the drawings, the foregoing and other features of the present application will become apparent through the following specification. The specification and the accompanying drawings specifically disclose the particular embodiment of the present application, showing part of the embodiment in which the principle of the present application can be adopted, it should be understood that the present application is not limited to the described embodiment, on the contrary, the present application includes all modifications, variations and equivalents that fall within the scope of the appended claims.

In embodiments of the present application, the terms "first", "second", etc., are used to distinguish different elements by their appellation, but do not indicate the spatial arrangement or chronological order of these elements, etc., and these elements shall not be limited by the terms. The term "and/or" includes any and all combinations of one or more of the terms listed in association with the term. The terms "contain", "include", "have", etc., refer to the presence of the stated feature, element, component or assembly, but do not exclude the presence or addition of one or more other features, elements, components or assemblies.

In embodiments of the present application, the singular forms "one", "the", etc., including the plural forms, shall be broadly understood as "a sort of' or "a kind of' and not limited to the meaning of "one"; furthermore, the term "said" shall be understood to include both the singular form and the plural form, unless it is expressly indicated otherwise in the context. In addition, the term "according to" should be understood to mean "at least partially according to ...", and the term "based on" should be understood to mean "based at least partially on ...", unless it is expressly indicated otherwise in the context.

In embodiments of the present application, the term "communications network" or "wireless communications network" may refer to a network that complies with any of the following communication standards, such as Long Term Evolution (LTE), Enhanced Long Term Evolution (LTE-A), Wideband Code Division Multiple Access (WCDMA), High-Speed Packet Access (HSPA), etc.

In addition, the communication between the devices in the communication system can be carried out according to the communication protocol of any stage, for example, including but not being limited to 1G (generation), 2G, 2.5G, 2.75G, 3G, 4G, 4.5G and 5G, New Radio (NR), future 6G and etc., and/or other communication protocols currently known or to be developed in the future.

In embodiments of the present application, the term "network device" refers to, for example, a device in the communication system that connects a terminal equipment to the communication network and provides services to the terminal equipment. The network device may include but is not limited to: a base station (BS), an access point (AP), a transmission reception point (TRP), a broadcast transmitter, a mobile management entity (MME), a gateway, a server, a radio network controller (RNC), a base station controller (BSC), etc.

The base station may include, but is not limited to, a node B (NodeB or NB), an evolution node B (eNodeB or eNB), 5G base station (gNB), an IAB donor, etc., and may also include a remote radio head (RRH), a remote radio unit (RRU), a relay, or a low-power node (such as femto, pico, etc.). And the term "base station" may include some or all of their functions, with each base station providing communication coverage to a specific geographic area. The term "cell" can refer to a base station and/or its coverage area, depending on the context in which the term is used.

In embodiments of the present application, the term "user equipment" (UE) or "terminal equipment or terminal device" (TE) refers, for example, to a device that is connected to the communication network through the network device and receives network services. The terminal equipment can be fixed or movable, and can also be called a mobile station (MS), a terminal, a subscriber station (SS), an access terminal (AT), a station, etc.

The terminal equipment may include but is not limited to: a cellular phone, a personal digital assistant (PDA), a wireless modems, a wireless communication device, a handheld device, a machine-type communication device, a laptop computer, a cordless phone, a smart phone, a smart watch, a digital camera, etc.

For another example, in scenarios such as Internet of Things (IoT), the terminal equipment may also be a machine or an apparatus that performs monitoring or measurement, and may include, but is not limited to, a machine type communication (MTC) terminal, a vehicle communication terminal, a device to device (D2D) terminal, a machine to machine (M2M) terminal, and etc.

In addition, the term "network side" or "network device side" refers to the side of the network, which may be a base station or may include one or more network devices as described above. The term "user side" or "terminal side" or "terminal equipment side" refers to the side of the user or terminal, which may be a UE or may include one or more terminal equipments as described above. Without specifically indicated, "device" can refer to a network device or a terminal equipment.

Hereinafter the scenarios of in the embodiments of the present application are illustrated by examples, but which is not limited in the present application.

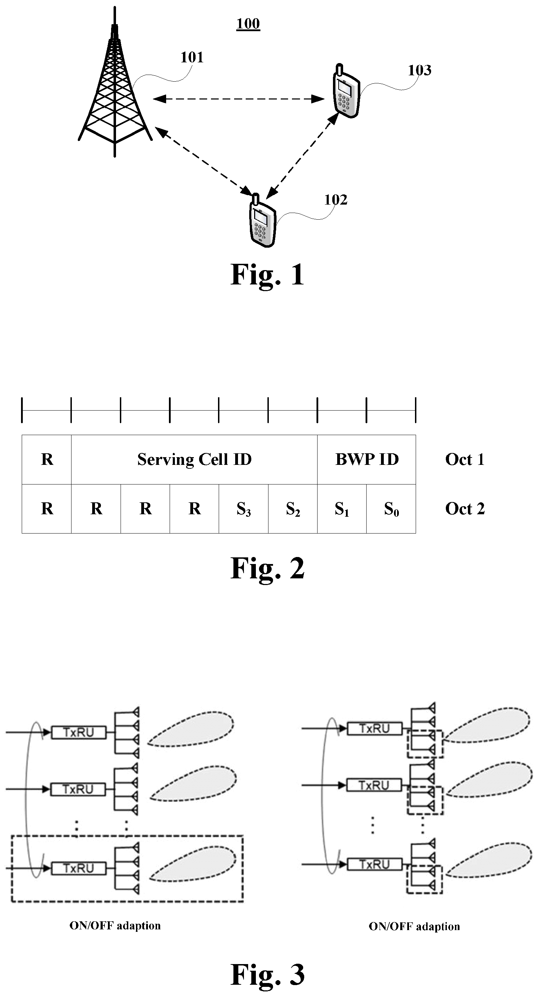

FIG. 1 is a schematic diagram of a communication system in an embodiment of the present application, illustrating the case of the terminal equipment and the network device as examples. As shown in FIG. 1, a communication system 100 may include a network device 101 and terminal equipments 102 and 103. For simplicity, FIG. 1 illustrates only two terminal equipments and one network device as examples, but which is not limited in the embodiment of the present application.

In an embodiment of the present application, existing services or services that can be implemented in the future may be transmitted between the network device 101 and the terminal equipments 102, 103. For example, these services may include, but are not limited to, enhanced Mobile Broadband (eMBB), massive Machine Type Communication (mMTC), and Ultra-Reliable and Low-Latency Communication (URLLC), and etc.

It is worth noting that FIG. 1 shows that two terminal equipments 102 and 103 are within the coverage of the network equipment 101, but which is not limited in the present application. Both of the two terminal equipments 102 and 103 may not be within the coverage of the network device 101, or one terminal equipment 102 is within the coverage of the network device 101 and the other terminal equipment 103 is outside the coverage of the network device 101.

In an embodiment of the present application, the high-level signaling may be, for example, Radio Resource Control (RRC) signaling; for example, it is called an RRC message, e.g., including MIB, system information, and a dedicated RRC message; or it is referred to as RRC information element (RRC IE). For example, the high-level signaling may also be Medium Access Control (MAC) signaling; or is also called MAC control element (MAC CE). However, the present application is not limited to this.

In a mobile communication system, usually a terminal equipment measures channel state information (CSI) based on indication and configuration of a network device, and then reports the measured CSI to the network device. When scheduling the terminal equipment, the network device may refer to the CSI to schedule the terminal equipment to perform transmission using an appropriate resource by an appropriate transmission method. Different terminal equipments may experience different physical channel conditions. Resources are used reasonably and effectively by using a CSI feedback mechanism, whereby transmission efficiency of the entire network is improved.

In the CSI feedback mechanism of NR, a terminal equipment measures a reference signal based on a CSI configuration and performs reporting. The CSI may include a channel quality indicator (CQI), a precoding matrix indicator (PMI), a CSI-RS resource indicator (CRI), a synchronization signal/physical broadcast channel (SS/PBCH) resource indicator (SSBRI), a layer indicator (LI), and a rank indicator (RI).

In a CSI reporting framework of the NR, the CSI reporting is performed in a way that the CSI reporting is associated with a CSI resource. The CSI reporting may be configured as the following three types: a periodic CSI (P-CSI) reporting which is transmitted only on a physical uplink control channel (PUCCH); a semi-persistent CSI (SP-CSI) reporting which is transmitted on the PUCCH or a physical uplink shared channel (PUSCH); and an aperiodic CSI (AP-CSI) reporting which is transmitted only on the PUSCH.

For the semi-persistent CSI reporting on PUCCH (SP-CSI reporting on PUCCH), a PUCCH resource used for transmitting the CSI reporting is configured by reportConfigType. The semi-persistent reporting on PUCCH is activated by an activation command (MAC CE), which selects a semi-persistent reporting setting on the PUCCH for use by the terminal equipment. When the terminal equipment transmits a PUCCH with HARQ-ACK information on a slot n corresponding to a PDSCH carrying the activation command, a specified semi-persistent reporting setting should be applied from the first slot after a slot $n + 3N_{slot}^{subframe,\mu}$, wherein μ is a sub-carrier spacing (SCS) configuration of the PUCCH.

The activation/deactivation of the semi-persistent CSI reporting of the PUCCH may be identified by an MAC subheader with a logical channel identifier (LCID) in the MAC CE. FIG. 2 is a schematic diagram of a SP-CSI on PUCCH activation/deactivation MAC CE. As shown in FIG. 2, the MAC CE has a fixed size of 16 bits and includes the following fields:

- serving cell ID: this field represents an identifier of a serving cell applied by the MAC CE, with a length of 5 bits;
- BWP ID: this field represents an UL BWP applied by the MAC CE, serving as a codepoint for a DCI bandwidth part indicator field, and the BWP ID field has a length of 2 bits;
- Si: represents an activated/deactivated state of the semi-persistent CSI report configuration in *CSI-reportconfig-toaddmodlist*. $S_0$ represents a report configuration that includes a PUCCH resource for SP CSI reporting in a specified bandwidth part (BWP), and has the lowest CSI report configuration ID (CSI- reportconfigid) in a list with the type set as *semiPersistentOnPUCCH;* $S_1$ represents another report configuration, which includes a PUCCH resource for SP CSI reporting in the specified BWP, and has the second lowest CSI-reportconfigid, and so on. If the number of the report configuration in the list with the type set as *semiPersistentOnPUCCH* in the specified BWP is smaller than i + 1, an MAC entity ignores the Si field. The Si field being set as 1 means that the corresponding semi-persistent CSI report configuration is to be activated, while the Si field being set as 0 means that the corresponding semi-persistent CSI report configuration is to be deactivated;

- R: reserved bit, being set as 0.

The MAC CE is schematically shown in the above. The following Table 1 and Table 2 respectively show the situation of MAC sub-headers LCID and eLCID.

Table 1 (Table 6.2.1-1 Values of LCID for DL-SCH)

| Codepoint/Index | LCID values |
|---|---|
| 0 | CCCH |
| 1-32 | Identity of the logical channel of DCCH, DTCH and multicast MTCH |
| 33 | Extended logical channel ID field (two-octet eLCID field) |
| 34 | Extended logical channel ID field (one-octet eLCID field) |
| 35-46 | Reserved |
| 47 | Recommended bit rate |
| 48 | SP ZP CSI-RS Resource Set Activation/Deactivation |
| 49 | PUCCH spatial relation Activation/Deactivation |
| 50 | SP SRS Activation/Deactivation |
| 51 | SP CSI reporting on PUCCH Activation/Deactivation |
| 52 | TCI State Indication for UE-specific PDCCH |
| 53 | TCI States Activation/Deactivation for UE-specific PDSCH |
| 54 | Aperiodic CSI Trigger State Subselection |
| 55 | SP CSI-RS/CSI-IM Resource Set Activation/Deactivation |
| 56 | Duplication Activation/Deactivation |
| 57 | SCell Activation/Deactivation (four octets) |
| 58 | SCell Activation/Deactivation (one octet) |
| 59 | Long DRX Command |
| 60 | DRX Command |
| 61 | Timing Advance Command |
| 62 | UE Contention Resolution Identity |
| 63 | Padding |

Table 2 (Table 6.2.1-1b Values of one-octet eLCID for DL-SCH)

| Codepoint | Index | LCID values |
|---|---|---|
| 0 to 226 | 64 to 290 | Reserved |
| 227 | 291 | Serving Cell Set based SRS TCI State Indication MAC CE |
| 228 | 292 | SP/AP SRS TCI State Indication MAC CE |
| 229 | 293 | BFD-RS Indication MAC CE |
| 230 | 294 | Differential Koffset |
| 231 | 295 | Enhanced SCell Activation/Deactivation MAC CE with one octet Ci field |

(continued)

| Codepoint | Index | LCID values |
|---|---|---|
| 232 | 296 | Enhanced SCell Activation/Deactivation MAC CE with four octet Ci field |
| 233 | 297 | Unified TCI States Activation/Deactivation MAC CE |
| 234 | 298 | PUCCH Power Control Set Update for multiple TRP PUCCH repetition MAC CE |
| 235 | 299 | PUCCH spatial relation Activation/Deactivation for multiple TRP PUCCH repetition MAC CE |
| 236 | 300 | Enhanced TCI States Indication for UE-specific PDCCH |
| 237 | 301 | Positioning Measurement Gap Activation/Deactivation Command |
| 238 | 302 | PPW Activation/Deactivation Command |
| 239 | 303 | DL Tx Power Adjustment |
| 240 | 304 | Timing Case Indication |
| 241 | 305 | Child IAB-DU Restricted Beam Indication |
| 242 | 306 | Case-7 Timing advance offset |
| 243 | 307 | Provided Guard Symbols for Case-6 timing |
| 244 | 308 | Provided Guard Symbols for Case-7 timing |
| 245 | 309 | Serving Cell Set based SRS Spatial Relation Indication |
| 246 | 310 | PUSCH Pathloss Reference RS Update |
| 247 | 311 | SRS Pathloss Reference RS Update |
| 248 | 312 | Enhanced SP/AP SRS Spatial Relation Indication |
| 249 | 313 | Enhanced PUCCH Spatial Relation Activation/Deactivation |
| 250 | 314 | Enhanced TCI States Activation/Deactivation for UE-specific PDSCH |
| 251 | 315 | Duplication RLC Activation/Deactivation |
| 252 | 316 | Absolute Timing Advance Command |
| 253 | 317 | SP Positioning SRS Activation/Deactivation |
| 254 | 318 | Provided Guard Symbols |
| 255 | 319 | Timing Delta |

The spatial-domain /energy-domain element adjustment techniques related to network energy saving may be divided into two types.

FIG. 3 is a schematic diagram of adjusting spatial-domain/energy-domain elements. As shown in the left part of FIG. 3, adjustment of Type 1 is to enable or disable all antennas (factors) associated with one logical antenna port. In this way, the network device may turn off all antennas (factors) corresponding to one or more antenna ports. After the antennas are turned off, a transmission power of each port remains unchanged, and the total number of antenna ports may decrease. Therefore, such adjustment may directly affect the number of the antenna ports.

As shown in the right part of FIG. 3, adjustment of Type 2 is to enable or disable part of antennas (factors) associated with one logical antenna port. In this way, the network device may turn off part of the antennas (factors) corresponding to all antenna ports. After the antennas (factors) are turned off, the number of antenna ports remains unchanged, and the transmission power of each port decreases. Therefore, such adjustment may affect the beamforming gain of the network device, which in turn affects the transmission power of the reference signal.

In network energy-saving scenarios, in order to alleviate a channel mutation problem caused by adjusting the number of antennas by the network device, a feasible solution is that the terminal equipment simultaneously transmits a plurality of CSI results, each of which corresponds to an antenna adjustment mode or an antenna configuration scheme, so that the network device is enabled to obtain CSI in a timely and accurate manner for data scheduling, and is also enabled to determine a recommendation scheme for antenna adjustment.

In network energy-saving scenarios, the terminal equipment may simultaneously transmit a plurality of CSIs which may be included in the same CSI reporting or in different CSI reportings. When a plurality of CSIs are included in one CSI reporting, the CSI reporting overhead may be very high, which imposes a great burden on the normal transmission of the terminal equipment. Therefore, in network energy-saving scenarios, how to indicate the CSI report configuration has become an urgent problem to be solved. The following description is made for example in an energy-saving scenario, but the present application is not limited to this and may be applied to any scenario involving channel state information reporting.

Embodiments of First Aspect

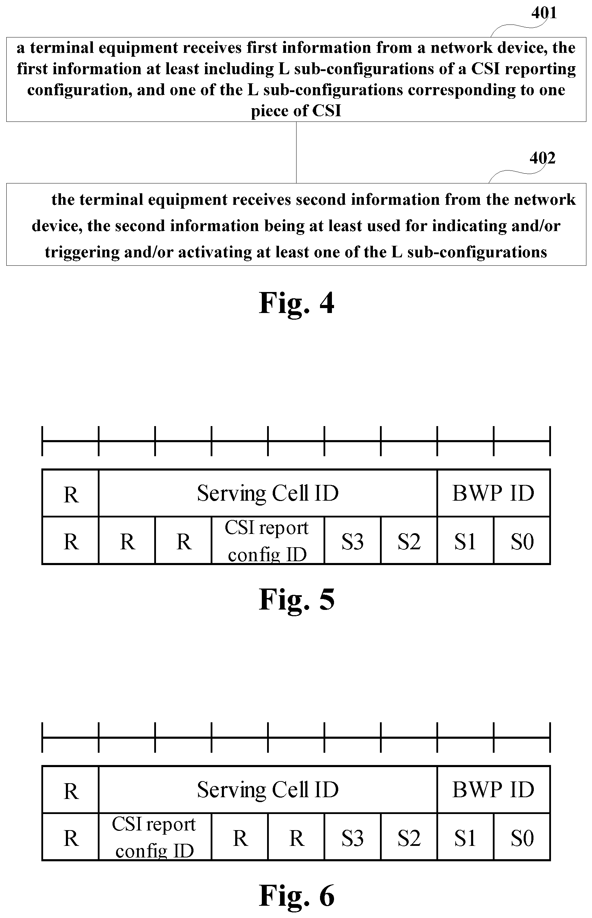

The embodiments of the present application provide a method for indicating a channel state information report configuration, which is illustrated from a terminal equipment side. FIG. 4 is a schematic diagram of a method for indicating a channel state information report configuration in an embodiment of the present application, as shown in FIG. 4, the method including:

401: a terminal equipment receives first information from a network device, the first information at least including L sub-configurations of a CSI report configuration, and one of the L sub-configurations corresponding to one piece of CSI; and

402: the terminal equipment receives second information from the network device, the second information being at least used for indicating and/or triggering and/or activating at least one of the L sub-configurations.

It is worth noting that FIG. 4 above only schematically illustrates the embodiment of the present application, but the present application is not limited to this. For example, the order of execution between operations may be adjusted appropriately, and some other operations may be added or one or more operations may be removed. Those skilled in the art may make appropriate variations in accordance with the above contents, and which is not limited to the disclosure of FIG. 4 above.

In some embodiments, the terminal equipment transmits a CSI reporting corresponding to the indicated and/or triggered and/or activated at least one sub-configuration to the network device based on the first information and/or the second information.

In some embodiments, the first information may be used for CSI-RS resource configuration.

For example, an NZP CSI-RS resource configuration used for channel measurement in network energy-saving spatial-domain adaptation may include:

- a first type of resource configuration (e.g., A1-1-revised type): one resource set in one resource setting contains a plurality of resources, where one resource is associated with only one spatial adaptation pattern;
- a second type of resource configuration (e.g., A1-2-revised type): one resource set in one resource setting contains at least one resource, where one resource may be associated with one or more spatial adaptation patterns;

For another example, the NZP CSI-RS resource configuration used for channel measurement in network energy-saving energy-domain adaptation includes:

- a second type of resource configuration (e.g., A1-2-revised type): one resource set in one resource setting contains at least one resource, where one resource may be associated with one or more power offset values, that is, one resource may be associated with one or more energy-domain adaptation patterns (power adaptation pattern).

In some embodiments, a bundling relationship between a spatial-domain/energy-domain adaptation type and a resource configuration may be at least one of the following: the spatial-domain adaptation of Type 1 only supports the second resource configuration type (e.g. A1-2-revised type); the spatial-domain adaptation of Type 2 only supports the first resource configuration type (e.g. A1-1-revised type); or the energy-domain adaptation may support the second resource configuration type (e.g., A1-2-revised type).

In some embodiments, the CSI report configuration includes a plurality of sub-configurations. For example, one CSI report configuration may include L sub-configurations, each sub-configuration corresponds to one spatial-domain/energy-domain adaptation mode, and each sub-configuration corresponds to one CSI result; if L of the CSI report configuration is greater than 1, each sub-configuration includes identification information or indication parameters or the like.

For example, one of L sub-configurations includes at least one sub-configuration index/ID to represent that sub-configuration. L sub-configurations correspond to a plurality of sub-configuration indexes/IDs, and a sub-configuration corresponding to a minimum value in these sub-configuration indexes/IDs is a reference sub-configuration, and the reference sub-configuration may correspond to at least the following parameters: the maximum number of ports, and/or a *nrOfport* value in the CSI-RS resource configuration, and/or a *powerControlOffset* value in the CSI-RS resource configuration, but the present application is not limited thereto.

For another example, one of L sub-configurations includes at least a first parameter or a second parameter, the first parameter includes Type 1 spatial-domain adaptation related parameters and/or Type 1 energy-domain adaptation related parameters, and the second parameter includes Type 2 spatial-domain adaptation related parameters or Type 2 energy-domain adaptation related parameters.

The Type 1 spatial-domain adaptation related parameters are related to network energy saving and are used for Type 1 spatial-domain adaptation using the second resource configuration type (e.g. A1-2-revised type). For example, the Type 1 spatial-domain adaptation related parameters include the following information: N1, N2 information for a single-antenna panel, and/or N1, N2, Ng information for a multi-antenna panel; and/or, port subset indication information based on a bitmap, one bit of the bitmap corresponds to one port; and/or, codebook subset restriction information; and/or, rank restriction information; the present application is not limited thereto.

The Type 1 energy-domain adaptation related parameters are related to network energy saving and are used for Type 1 energy-domain adaptation using the second resource configuration type (e.g. A1-2-revised type). For example, the Type 1 energy-domain adaptation related parameters include at least one or more power offsets (*powerControlOffset*), for example, one power offset (*powerControlOffset*) corresponds to one CSI-RS resource in the associated CSI resource set, and the number of the power offsets (*powerControlOffset*) is the same as the number of the CSI-RS resources in the associated CSI resource set;

or, the Type 1 energy-domain adaptation related parameters include at least an offset quantity of one power offset (*powerControlOffset*), for example, the offset quantity of the power offset (*powerControlOffset*) corresponds to all CSI-RS resources in the associated CSI resource set;
or, the Type 1 energy-domain adaptation related parameters include at least one power offset (*powerControlOffset*) index value, for example, the power offset index value corresponds to all CSI-RS resources in the associated CSI resource set.

The Type 2 spatial-domain adaptation related parameters are related to network energy saving and are used for Type 2 spatial-domain adaptation using the first resource configuration type (e.g. A1-1-revised type). For example, the Type 2 spatial-domain adaptation related parameters include at least one CSI-RS resource ID list, which may include one CSI-RS resource ID or a plurality of CSI-RS resource IDs. Therefore, one sub-configuration may be associated with at least one CSI-RS resource ID.

The Type 2 energy-domain adaptation related parameters are related to network energy saving and are used for Type 2 energy-domain adaptation using the first resource configuration type (e.g. A1-1-revised type). For example, the Type 2 energy-domain adaptation related parameters include at least one CSI-RS resource ID list, which may include one CSI-RS resource ID or a plurality of CSI-RS resource IDs. Therefore, one sub-configuration may be associated with at least one CSI-RS resource ID.

In some embodiments, for example, the Type 2 spatial-domain adaptation related parameters are the same as the Type 2 energy-domain adaptation related parameters. For another example, the second parameter includes the Type 2 spatial-domain adaptation related parameters or the Type 2 energy-domain adaptation related parameters. For another example, the second parameter includes one CSI-RS resource ID list, which is used for both Type 2 spatial-domain adaptation and Type 2 energy-domain adaptation.

The following examples will be used for explanation.

For example, the CSI report configuration includes 4 sub-configurations, the CSI report configuration is associated with one CSI-RS resource set that contains 8 CSI-RS resources. In the CSI report configuration, the sub-configuration 0 corresponds to one CSI-RS resource ID list, namely CSI-RS resource 0 and CSI-RS resource 1, the sub-configuration 1 corresponds to one CSI-RS resource ID list, namely CSI-RS resource 2 and CSI-RS resource 3, the sub-configuration 2 corresponds to one CSI-RS resource ID list, namely CSI-RS resource 4 and CSI-RS resource 5, and the sub-configuration 3 corresponds to one CSI-RS resource ID list, namely CSI-RS resource 6 and CSI-RS resource 7.

For example, a CSI-RS resource to which each sub-configuration corresponds is configured with the same *powerControlOffset* or *power ControlOffsetSS*, while CSI-RS resources to which different sub-configurations correspond may be configured with different *powerControlOffsets* or *power ControlOffsetSSs*.

For example, the CSI-RS resource 0 and the CSI-RS resource 1 (corresponding to the same sub-configuration 0) are configured with *powerControlOffset* = 0dB and *powerControlOffsetSS* = 0dB, the CSI-RS resource 2 and the CSI-RS resource 3 (corresponding to the same sub-configuration 1) are configured with *powerControlOffset* = 3dB and *power-ControlOffsetSS* = 3dB, the CSI-RS resource 4 and the CSI-RS resource 5 (corresponding to the same sub-configuration 2) are configured with *powerControlOffset* = -3dB and *powerControlOffsetSS* = 0dB, and the CSI-RS resource 6 and the CSI-RS resource 7 (corresponding to the same sub-configuration 3) are configured with *powerControlOffset* = 6dB and *powerControlOffsetSS* = 3dB. The *powerControlOffset* is used for the Type 2 energy-domain adaptation, and the *powerControlOffsetSS* is used for the Type 2 spatial-domain adaptation. The CSI-RS resource IDs corresponding to the sub-configurations in the Type 2 energy-domain adaptation and the Type 2 spatial-domain adaptation are the same.

In some embodiments, the first parameter includes Type 1 spatial-domain adaptation related parameters and Type 1 energy-domain adaptation related parameters, which means that the adaptation indicated by the first parameter is Type 1 spatial-domain and Type 1 energy-domain joint adaptation. In some embodiments, the first parameter includes only the Type 1 spatial-domain adaptation related parameters, which means that the adaptation is a Type 1 spatial-domain adaptation. In some embodiments, the first parameter includes only the Type 1 energy-domain adaptation related parameters, which means that the adaptation is a Type 1 energy-domain adaptation.

In some embodiments, one sub-configuration does not include both the first parameter and the second parameter, that is, one sub-configuration does not include both the Type 1 spatial-domain adaptation related parameter and the Type 2 spatial-domain adaptation related parameter. Alternatively, one sub-configuration does not include both the Type 1 energy-domain adaptation related parameter and the Type 2 energy-domain adaptation related parameter.

In some embodiments, for example, the L sub-configurations are configured by radio resource control signaling. The maximum value of the L depends on a capability of the terminal equipment. The maximum value of the L may be configured via radio resource control signaling, or may be determined based on a predefined method, or may be determined based on a default rule.

For example, a *maxNrofSUBCONFIG* parameter is configured by a higher layer to determine the maximum configurable value for the sub-configurations in CSI report configuration. Table 3 below provides an example of RRC configuration for a sub-configuration.

Table 3

| | | | |
|---|---|---|---|
| CSI-ReportConfig ::= | SEQUENCE { | | |
| reportConfigId | CSI-ReportConfigId, | | |
| carrier | ServCellIndex | OPTIONAL, | -- Need S |
| resourcesForChannelMeasurement | CSI-ResourceConfigId, | | |
| ...... | | | |
| csi-subconfigList | SEQUENCE (SIZE (1..maxNrofSUBCONFIG)) OF CSI-subconfig | | |

| | |
|---|---|
| OPTIONAL, | -- Need R |
| } | |
| CSI-sub-config ::= SEQUENCE { | |
| csi-subconfigId CSI-subconfigId, | |
| csi-subconfig CHOICE { | |
| Type1 SD and/or PD joint adaptation | SEQUENCE { |
| Port subset indication bitmap , | |
| CodebookConfig | OPTIONAL |
| Ri-restriction | OPTIONAL |
| powerControlOffset list | OPTIONAL, |
| }, | |
| Type2 SD and/or PD joint adaptation | SEQUENCE { |
| CSI-RS resource list | OPTIONAL, |
| }, | |
| } | |

In some embodiments, an association relationship between a CSI-RS resource configuration and a sub-configuration is as follows:

For example, for the first resource configuration type (such as A1-1-revised type), one or more CSI-RS resources in the CSI-RS resource set used for channel measurement may be associated with the same sub-configuration provided in the CSI report configuration, that is, one sub-configuration in the CSI report configuration may be associated with one or more CSI-RS resources used for channel measurement in the CSI-RS resource set; the resources in the resource set used for channel measurement have the same number of antenna ports.

For another example, for the second resource configuration type (e.g. A1-2-revised type), all CSI-RS resources (which may be one or more) in the CSI-RS resource set used for channel measurement are associated with each sub-configuration provided in the CSI report configuration, that is, each CSI-RS resource is associated with all sub-configurations, and the resources in the resource set used for channel measurement have the same number of antenna ports.

In some embodiments, a CSI reporting process for a plurality of sub-configurations is as follows: for a CSI report configuration that includes L sub-configurations, a framework needs to be supported to enable one terminal equipment to report N pieces of CSI at one reporting moment, the N pieces of CSI are associated with N sub-configurations in L (where $1 \leq N \leq L$), and each CSI corresponds to one sub-configuration. N = 1 represents a single-CSI reporting, and N > 1 represents a multiple-CSI reporting.

For semi-persistent/aperiodic CSI reporting, it supports a base station to trigger/indicate/activate a reporting of N pieces of CSI in L pieces of CSI, where $1 \leq N \leq L$; the maximum values of L and N depend on a terminal capability. The specific triggering mechanism is as follows:

- For PUSCH based aperiodic CSI and semi-persistent CSI reporting, DCI based triggering is supported:

  For example, a triggering state associated with N sub-configurations is indicated by the CSI request field in an existing DCI. Different triggering states may represent different subsets of L sub-configurations. The DCI is UE specific (in this case, traditional DCI formats are applicable);
  For example, for A-CSI-RS, CPU (CSI Processing Unit) and CSI-RS resource/port calculations depend on the indicated N sub-configurations.

- For PUCCH based semi-persistent CSI reporting, it supports triggering based on MAC CE:
  For example, it supports selection of indication information of N sub-configurations in one MAC-CE.

In some embodiments, the first information is carried by RRC signaling; the CSI report configuration is for PUCCH based semi-persistent CSI reporting. The second information is carried by MAC CE.

For example, the second information contains an LCID with a codepoint or an index greater than or equal to 35 and smaller than or equal to 46, or the second information contains an eLCID with a codepoint greater than or equal to 0 and smaller than or equal to 226 and/or an index greater than or equal to 64 and smaller than or equal to 290.

In some embodiments, the MAC CE includes one first field and one or more second fields, the first field is used to indicate a CSI report configuration ID, and the second field is used to indicate whether a sub-configuration of the CSI report configuration ID is indicated/triggered/activated.

The width of one first field is Y bits; one second field is 1 bit; the number of the one or more second fields is less than or equal to the number of sub-configurations of the CSI report configuration ID, the second fields are mapped to the sub-configurations of the CSI report configuration ID in an ascending order of the sub-configuration indexes of the CSI report configuration ID, the second field with the lowest index value or index value/codepoint of '0' corresponds to the sub-configuration with the lowest index value in the CSI report configuration ID, and the second field with the second lowest index value or index value/codepoint of '1' corresponds to the sub-configuration with the second lowest index value in the CSI report configuration ID, and so on; one value of one of the second fields indicates that the corresponding sub-configuration is activated (e.g., the value is 1), and the other value indicates that the corresponding sub-configuration is deactivated (e.g., the value is 0).

For example, an MAC CE for triggering/activating/indicating sub-configuration of PUCCH based semi-persistent CSI reporting is identified/confirmed by an MAC sub-header with LCID or eLCID, wherein LCID codepoint/index is greater than or equal to 35 and smaller than or equal to 46, for example, LCID may be 35 or 36, etc.; the codepoint of eLCID is greater than or equal to 0 and smaller than or equal to 226, and the index is greater than or equal to 64 and smaller than or equal to 290, and for example, the codepoint of eLCID is 0 and the index is 64.

FIG. 5 is an example diagram of an MAC CE in an embodiment of the present application. As shown in FIG. 5, the MAC CE has a fixed length of X bits, specifically as follows:

- Serving cell ID: this field represents an identifier of a serving cell applied by the MAC CE, with a length of 5 bits.
- BWP ID: this field represents an UL BWP applied by the MAC CE, serving as a codepoint for a specified DCI bandwidth part indicator field, and the BWP ID field has a length of 2 bits.
- CSI report configuration ID (CSI report configID): this field is the first field used to indicate one CSI report configuration ID, the CSI report configuration is for PUCCH based semi-persistent CSI reporting, and the CSI report configuration includes L sub-configurations, this field is used to represent the CSI report configuration ID containing L sub-configurations, that is, to indicate the CSI report configuration IDs of N sub-configurations in the L sub-configurations.

The length of this field is Y bits. Taking a width of the CSI report configuration ID, i.e., the first field being 2 bits, as an example, 00 represents the first CSI report configuration ID, which is the first PUCCH based semi-persistent CSI report configuration ID used for activation/deactivation, 01 represents the second CSI report configuration ID, which is the second PUCCH based semi-persistent CSI report configuration ID used for activation/deactivation, and the like, and so on.

- $S_i$: this field is the second field used to indicate the activated/deactivated states of L sub-configurations in the PUCCH based semi-persistent CSI report configuration. The number of $S_i$ is greater than or equal to the number L of the sub-configurations, that is, the number of $S_i$ is equal to the maximum number of the sub-configurations allowed to be configured. $S_0$ corresponds to a sub-configuration having the lowest sub-configuration index/ID among a plurality of sub-configurations included in the CSI report configuration indicated by the first field on an indicated BWP, $S_1$ corresponds to a sub-configuration having the second lowest sub-configuration index/ID among the plurality of sub-configurations included in the CSI report configuration indicated by the first field on the indicated BWP, and so on. If the number of the sub-configurations included in the CSI report configuration is less than i + 1, an MAC entity ignores the $S_i$ field. $S_i$ field being set as 1 means that the corresponding sub-configuration is to be activated, and the $S_i$ field being set as 0 means that the corresponding sub-configuration is to be deactivated.
- R: reserved bit, for example, being set as 0.

Thus, the indication of one or more sub-configurations of one CSI report configuration is enabled.

FIG. 5 illustratively explains an example of an MAC CE in an embodiment of the present application. FIG. 5 gives an example that a width of the CSI report ID is 2 bits, but the embodiment of the present application is not limited to this. The width of the CSI report config ID is greater than or equal to 1 bit and smaller than or equal to Y bit, where Y is a positive integer greater than 1, such as Y = 2.

FIG. 6 is another example diagram of an MAC CE in an embodiment of the present application. As shown in FIG. 6, the CSI report config ID may also be located at other locations. FIGs. 5 and 6 give some examples that the number of $S_i$ is 4 (S0~S3), but the embodiment of the present application is not limited to this.

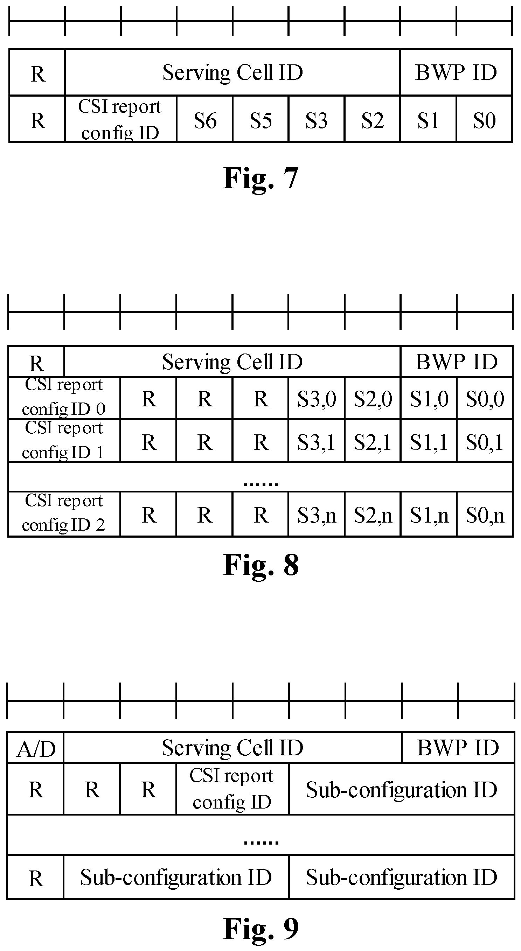

FIG. 7 is another example diagram of an MAC CE in an embodiment of the present application. As shown in FIG. 7, an example is given that the number of $S_i$ is 6 (S0~S5). The number of $S_i$ is greater than or equal to 1 and less than or equal to N, where N is a positive integer greater than 1, such as N = 8.

In some embodiments, the MAC CE includes one or more second fields, which are used to indicate whether one sub-configuration of the CSI report configuration ID is activated.

One second field is 1 bit; the number of the one or more second fields is greater than or equal to the number of sub-configurations of the CSI report configuration ID, that is, the number of the second fields is equal to the maximum number of the sub-configurations allowed to be configured, the second fields are mapped to the sub-configurations of the CSI report configuration ID in an ascending order of the sub-configuration indexes of the CSI report configuration ID, the second field with the lowest index value or index value/codepoint of '0' corresponds to the sub-configuration with the lowest index value in the CSI report configuration ID, and the second field with the second lowest index value or index value/codepoint of '1' corresponds to the sub-configuration with the second lowest index value in the CSI report configuration ID, and so on; one value of one of the second fields indicates that the corresponding sub-configuration is activated (e.g., the value is 1), and the other value indicates that the corresponding sub-configuration is deactivated (e.g., the value is 0).

For example, the CSI report config ID field may be removed from the MAC CE shown in FIGs. 5 to 7. The terminal equipment and the network device are by default configured with one PUCCH based semi-persistent CSI reporting for a plurality of sub-configurations. The terminal equipment has received the CSI report configuration information from the network device, thus there is no need to indicate the CSI report config ID in this MAC CE.

Thus, the indication of one or more sub-configurations of one CSI report configuration is enabled.

In some embodiments, the MAC CE includes a plurality of first fields and a plurality of second fields, the plurality of first fields are used to indicate a plurality of CSI report configuration IDs, and sub-configurations of the CSI report configuration IDs are indicated as being activated or deactivated by their respective one or more second fields.

For example, the MAC CE includes N1 first fields and N1*M second fields, one of the N1 first fields corresponds to M second fields, where, N1 > 1, M > 1. The first field is used to indicate the CSI report configuration ID, and the second field is used to indicate whether one sub-configuration of the CSI report configuration ID is activated. The one CSI report configuration ID corresponds to the M sub-configuration. The value of M is greater than or equal to the number of sub-configurations of the CSI report configuration ID, that is, M is the maximum number of configurable sub-configurations in one CSI report configuration.

For example, an MAC CE for triggering/activating/indicating sub-configuration of PUCCH based semi-persistent CSI reporting is identified/confirmed by an MAC sub-header with LCID or eLCID, wherein LCID codepoint/index is greater than or equal to 35 and smaller than or equal to 46, for example, LCID may be 35 or 36, etc.; the codepoint of eLCID is greater than or equal to 0 and smaller than or equal to 226, and the index is greater than or equal to 64 and smaller than or equal to 290, and for example, the codepoint of eLCID is 0 and the index is 64.

FIG. 8 is another example diagram of an MAC CE in an embodiment of the present application. As shown in FIG. 8, the MAC CE has a fixed length of X bits, specifically as follows:

- Serving cell ID: this field represents an identifier of a serving cell applied by the MAC CE, with a length of 5 bits.
- BWP ID: this field represents an UL BWP applied by the MAC CE, serving as a codepoint for a specified DCI bandwidth part indicator field, and the BWP ID field has a length of 2 bits.
- CSI report configuration $ID_i$ (CSI report configID i): this field is the first field, that is, one of the N1 CSI report configurations including a plurality of sub-configurations. CSI report config $ID_0$ represents the first CSI report configuration for sub-configuration indication, and CSI report config $ID_1$ represents the second CSI report configuration for sub-configuration indication, and so on. The length of this field is Y bits. Taking the width of each CSI report config ID being 2 bits as an example, 00 represents the first CSI report configuration ID, which is the first PUCCH based semi-persistent CSI report configuration ID used for activation/deactivation, 01 represents the second CSI report configuration ID, which is the second PUCCH based semi-persistent CSI report configuration ID used for activation/deactivation, and the like, and so on.

- $Si_i$: this field is the second field, representing activated/deactivated states of L sub-configurations in the PUCCH based semi-persistent CSI report configuration. $S0_i$ corresponds to a sub-configuration having the lowest sub-configuration index/ID among a plurality of sub-configurations included in the i-th CSI report configuration ID (CSI report configuration $ID_i$ (CSI report configID i)) on an indicated BWP, $S1_i$ corresponds to a sub-configuration having the second lowest sub-configuration index/ID among the plurality of sub-configurations included in the i-th CSI report configuration (CSI report configuration $ID_i$ (CSI report configID i)) on the indicated BWP, and so on. The i-th CSI report configuration refers to the i-th CSI report config ID in the CSI report configuration $ID_i$. If the number of the sub-configurations included in the CSI report configuration is less than i + 1, an MAC entity ignores the $S_i$ field. $S_i$ field being set as 1 indicates that the corresponding sub-configuration is to be activated, and the $S_i$ field being set as 0 means that the corresponding sub-configuration is to be deactivated.
- R: reserved bit, for example, being set as 0.

Thus, the indication of a plurality of sub-configurations of a plurality of CSI report configurations is enabled simultaneously.

In some embodiments, the MAC CE includes one first field, one or more third fields, and one fourth field. The first field is used to indicate the CSI report configuration ID, the one third field is used to indicate one sub-configuration ID of the CSI report configuration ID, and the fourth field is used to indicate whether the sub-configuration is activated or deactivated.

The fourth field is 1 bit; one value of the fourth field indicates that sub-configurations corresponding to one or more sub-configuration IDs are all activated (for example, the value is 1), and another value indicates that the sub-configurations corresponding to the one or more sub-configuration IDs are all deactivated (for example, the value is 0).

For example, an MAC CE for triggering/activating/indicating sub-configuration of PUCCH based semi-persistent CSI reporting is identified/confirmed by an MAC sub-header with LCID or eLCID, wherein LCID codepoint/index is greater than or equal to 35 and smaller than or equal to 46, for example, LCID may be 35 or 36, etc.; the codepoint of eLCID is greater than or equal to 0 and smaller than or equal to 226, and the index is greater than or equal to 64 and smaller than or equal to 290, and for example, the codepoint of eLCID is 0 and the index is 64.

FIG. 9 is another example diagram of an MAC CE in an embodiment of the present application. As shown in FIG. 9, the MAC CE has a fixed length of X bits, specifically as follows:

- A/d: This field is the fourth field, used to indicate whether to activate or deactivate the sub-configuration included in the CSI report configuration. For example, this field being set as 1 indicates activation, and this field being set as 0 indicates deactivation.
- Serving cell ID: this field represents an identifier of a serving cell applied by the MAC CE, with a length of 5 bits.
- BWP ID: this field represents an UL BWP applied by the MAC CE, serving as a codepoint for a specified DCI bandwidth part indicator field, and the BWP ID field has a length of 2 bits.
- CSI report configuration ID (CSI report configID): this field is the first field used to indicate an index of one CSI report configuration, the CSI report configuration is for PUCCH based semi-persistent CSI reporting, and the CSI report configuration includes L sub-configurations, this field is used to represent the CSI report configuration ID containing L sub-configurations, that is, to indicate the CSI report configuration IDs of N sub-configurations in the L sub-configurations. The length of this field is Y bits. Taking a width of the CSI report configuration ID being 2 bits, as an example, 00 represents the first CSI report configuration ID, which is the first PUCCH based semi-persistent CSI report configuration ID used for activation/deactivation, 01 represents the second CSI report configuration ID, which is the second PUCCH based semi-persistent CSI report configuration ID used for activation/deactivation, and the like, and so on.

- Sub-configuration ID: this field is the third field, which is used to indicate an index/ID of the sub-configuration of one CSI report configuration, that is, to indicate the sub-configuration to be activated or deactivated. A/D being set as 1 means that the corresponding sub-configuration in the sub-configuration ID field is activated. and A/D being set as 0 means that the corresponding sub-configuration in the sub-configuration ID field is deactivated. The length of this field is Z bits. The Z is a positive integer greater than 0 and smaller than 7, for example, Z = 2.
- R: reserved bit, for example, being set as 0.

Thus, the indication of one or more sub-configurations of one CSI report configuration is enabled.

In some embodiments, the MAC CE includes one first field and one or more third fields; the first field is used to indicate a CSI report configuration ID, and one of the third fields is used to indicate a sub-configuration ID of the CSI report configuration ID.

The sub-configurations corresponding to one or more sub-configuration IDs are all activated, or the sub-configurations corresponding to the one or more sub-configuration IDs are all deactivated.

For example, the A/D field may be removed from the MAC CE shown in FIG. 9, and R may be at the location of the A/D field. Because the deactivation of the sub-configuration may be not required for the sub-configuration indication, that is, the sub-configurations corresponding to the sub-configuration IDs are all activated by default. In multiple times of sub-configuration indication, information of the latter sub-configuration indication may override information of the previous sub-configuration indication; in addition, when the CSI reporting is deactivated, the sub-configuration indication information is invalid.

In some embodiments, the MAC CE includes one or more third fields and one fourth field, one of the third fields is used to indicate one or more sub-configuration IDs of the CSI report configuration ID, the fourth field is used to indicate whether the sub-configuration is activated or deactivated, and the CSI report configuration ID is predefined or pre-configured and includes a plurality of sub-configurations.

The fourth field is 1 bit; one value of the fourth field indicates that sub-configurations corresponding to one or more sub-configuration IDs are all activated, and another value indicates that the sub-configurations corresponding to the one or more sub-configuration IDs are all deactivated.

For example, the CSI report config ID field may be removed from the MAC CE shown in FIG. 9. The terminal equipment and the network device are by default configured with one PUCCH based semi-persistent CSI reporting for a plurality of sub-configurations. The terminal equipment has received the CSI report configuration information from the network device, thus there is no need to include the CSI report config ID in this MAC CE.

In some embodiments, the MAC CE includes one first field and one or more third fields, the one first field is used to indicate one CSI report configuration ID, one of the third fields is used to indicate one sub-configuration ID of the CSI report configuration ID, and the CSI report configuration ID is predefined or pre-configured and includes a plurality of sub-configurations.

The sub-configurations corresponding to one or more sub-configuration IDs are all activated, or the sub-configurations corresponding to the one or more sub-configuration IDs are all deactivated.

For example, the CSI report config ID field and the A/D field may be removed from the MAC CE shown in FIG. 9. The sub-configurations corresponding to the sub-configuration IDs in the MAC CE are all activated by default, or the sub-configurations corresponding to the sub-configuration IDs in the MAC CE are all deactivated by default.

In some embodiments, the MAC CE includes or corresponds to a plurality of first fields and a plurality of third fields, one of the first fields is used to indicate one CSI report configuration ID, one of the third fields is used to indicate one sub-configuration ID of the CSI report configuration ID, and one CSI report configuration ID corresponds to one or more sub-configuration IDs,
wherein sub-configurations of a plurality of CSI report configuration IDs are indicated as being activated or deactivated by one fourth field, or the sub-configurations of the plurality of CSI report configuration IDs are defaulted as being activated or deactivated.

For example, an MAC CE for triggering/activating/indicating sub-configuration of PUCCH based semi-persistent CSI reporting is identified/confirmed by an MAC sub-header with LCID or eLCID, wherein LCID codepoint/index is greater than or equal to 35 and smaller than or equal to 46, for example, LCID may be 35 or 36, etc.; the codepoint of eLCID is greater than or equal to 0 and smaller than or equal to 226, and the index is greater than or equal to 64 and smaller than or equal to 290, and for example, the codepoint of eLCID is 0 and the index is 64.

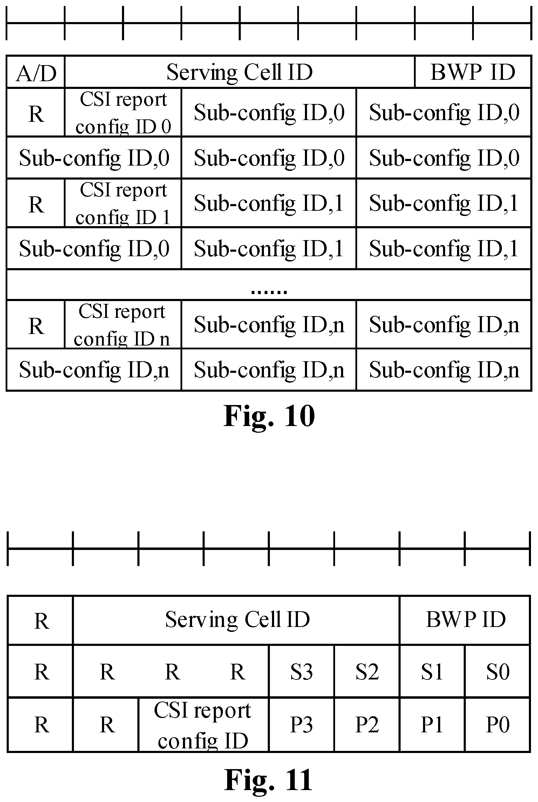

FIG. 10 is another example diagram of an MAC CE in an embodiment of the present application. As shown in FIG. 10, the MAC CE has a fixed length of X bits, specifically as follows:

- A/D: this field indicates whether to activate or deactivate the sub-configuration included in the CSI report configuration; for example, this field being set as 1 denotes activation, and this field being set as 0 denotes deactivation.

- Serving cell ID: this field represents an identifier of a serving cell applied by the MAC CE, with a length of 5 bits.
- BWP ID: this field represents an UL BWP applied by the MAC CE, serving as a codepoint for a specified DCI bandwidth part indicator field, and the BWP ID field has a length of 2 bits.
- CSI report configuration $ID_i$ (CSI report config$ID_i$): this field is the first field used to indicate one CSI report configuration ID among a plurality of CSI report configuration IDs, wherein each CSI report configuration ID includes a plurality of configurations. CSI report config $ID_0$ represents the first CSI report configuration for sub-configuration indication, and CSI report config $ID_1$ represents the second CSI report configuration for sub-configuration indication, and so on. The length of this field is Y bits. Taking a width of each CSI report config ID being 2 bits as an example, 00 represents the first CSI report configuration ID, which is the first PUCCH based semi-persistent CSI report configuration ID used for activation/deactivation, 01 represents the second CSI report configuration ID, which is the second PUCCH based semi-persistent CSI report configuration ID used for activation/deactivation, and the like, and so on.
- Sub-configuration $ID_i$: this field includes an index/ID of the sub-configuration to be activated or deactivated in the i-th CSI report configuration (CSI report configuration $ID_i$ (CSI report configID i)). A/D being set as 1 means that the corresponding sub-configuration in the sub-configuration ID field of the i-th CSI report configuration (CSI report configuration $ID_i$ (CSI report configID i)) is activated, and A/D being set as 0 means that the corresponding sub-configuration in the sub-configuration ID field of the i-th CSI report configuration (CSI report configuration $ID_i$ (CSI report configID i)) is deactivated. The length of this field is Z bits. The i-th CSI report configuration refers to the i-th CSI report config ID in the CSI report configuration $ID_i$. The Z is a positive integer greater than 0 and smaller than 7, for example, Z = 2.
- R: reserved bit, for example, being set as 0.

Thus, the indication of a plurality of sub-configurations of a plurality of CSI report configurations is enabled simultaneously.

The MAC CEs for activating/deactivating sub-configuration in the embodiments of the present application have been described schematically in the above, but the present application is not limited to this. For example, an MAC CE may include both information of activating/deactivating the sub-configuration and information of activating/deactivating the CSI report configuration.

In some embodiments, an MAC CE further includes one or more fifth fields for indicating whether a CSI report configuration is activated.

For example, an MAC CE for triggering/activating/indicating sub-configuration of PUCCH based semi-persistent CSI reporting is identified/confirmed by an MAC sub-header with LCID or eLCID, wherein LCID codepoint/index is greater than or equal to 35 and smaller than or equal to 46, for example, LCID may be 35 or 36, etc.; the codepoint of eLCID is greater than or equal to 0 and smaller than or equal to 226, and the index is greater than or equal to 64 and smaller than or equal to 290, and for example, the codepoint of eLCID is 0 and the index is 64.

FIG. 11 is another example diagram of an MAC CE in an embodiment of the present application. As shown in FIG. 11, the MAC CE has a fixed length of X bits, specifically as follows:

- Serving cell ID: this field represents an identifier of a serving cell applied by the MAC CE, with a length of 5 bits.
- BWP ID: this field represents an UL BWP applied by the MAC CE, serving as a codepoint for a specified DCI bandwidth part indicator field, and the BWP ID field has a length of 2 bits.
- $S_i$: this field indicates an activated/deactivated state of the semi-persistent CSI report configuration in *csi-ReportConfigToAddModList*. $S_0$ corresponds to the semi-persistent CSI report configuration that contains PUCCH resources on an indicated BWP and has the lowest CSI report configuration index in the *csi-ReportConfigToAddModList* list, $S_1$ corresponds to the semi-persistent CSI report configuration that contains PUCCH resources on the indicated BWP and has the second lowest CSI report configuration index in the *csi-ReportConfigToAddModList* list, and so on. If the number of the semi-persistent CSI report configurations in the list is less than i + 1, an MAC entity ignores the $S_i$ field. The $S_i$ being set as 1 means that the corresponding CSI report configuration is to be activated, and the $S_i$ being set as 0 means that the corresponding CSI report configuration is to be deactivated.
- CSI report configuration ID (CSI report configID): this field is the first field, which is an index of the semi-persistent CSI report configuration in *csi-ReportConfigTo AddModList*, and means that the CSI report configuration includes L sub-configurations, this field is used to represent the CSI report configuration ID containing L sub-configurations, that is, to indicate the CSI report configuration IDs of N sub-configurations in the L sub-configurations. The length of this field is 2 bits. 00 corresponds to the CSI report configuration to which $S_1$ corresponds, 01 corresponds to the CSI report configuration to which $S_2$ corresponds, 10 corresponds to the CSI report configuration to which $S_3$ corresponds, and 11 corresponds to the CSI report configuration to which $S_4$ corresponds.
- $P_i$: this field represents an activated/deactivated state of L sub-configurations in the semi-persistent CSI report configuration indicated by the CSI report configuration ID field. $P_0$ corresponds to a sub-configuration having the lowest sub-configuration index/ID among a plurality of sub-configurations included in the CSI report configuration on

an indicated BWP, $P_1$ corresponds to a sub-configuration having the second lowest sub-configuration index/ID among the plurality of sub-configurations included in the CSI report configuration on the indicated BWP, and so on. If the number of the sub-configurations included in the CSI report configuration is less than i + 1, an MAC entity ignores the $S_i$ field. The $P_i$ field being set as 1 means that the corresponding sub-configuration is to be activated, and the $P_i$ field being set as 0 means that the corresponding sub-configuration is to be deactivated.

- R: reserved bit, for example, being set as 0.

Thus, indications of the CSI report configuration activation/deactivation and the sub-configuration activation/-deactivation may be completed at the same time.

FIG. 11 shows activation/deactivation of the sub-configurations by taking the $P_i$ field as an example, but the present application is not limited to this. For example, any one or more schemes of the activation/deactivation of the sub-configuration in the above embodiments may be adopted.

The embodiments above only schematically illustrate the present application, but the present application is not limited to this, and appropriate variations can also be made on the basis of the above embodiments. For example, the above embodiments may be used separately, or one or more of the above embodiments may be combined.

As can be seen from the above embodiments, even in some scenarios of wireless communication applications (such as energy-saving mode), the network device may efficiently and accurately indicate the CSI report configuration to the terminal equipment, CSI reporting overhead and uplink resources may be saved.

Embodiments of Second Aspect

The embodiments of the present application provide a method for indicating a channel state information report configuration, which is illustrated from a network device side. The embodiments of the second aspect can be combined with the embodiments of the first aspect, and the same content as the embodiments of the first aspect will not be repeated.

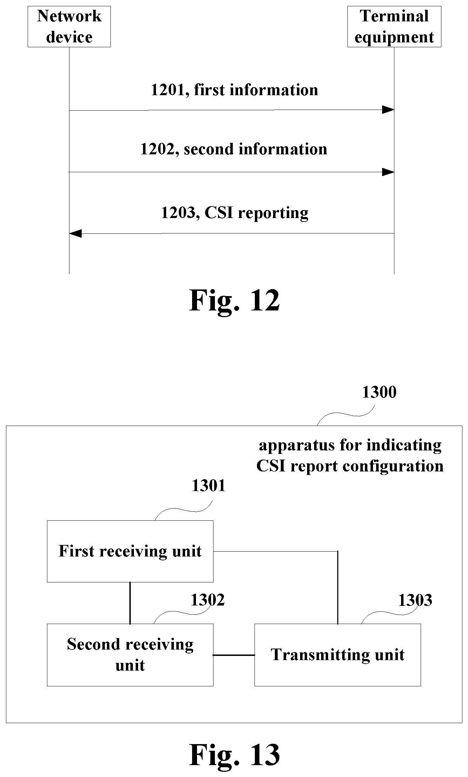

FIG. 12 is a schematic diagram of a method for indicating a channel state information report configuration in an embodiment of the present application, as shown in FIG. 12, the method including:

1201: a network device transmits first information to a terminal equipment, the first information at least including L sub-configurations of a CSI report configuration, and one of the L sub-configurations corresponding to one piece of CSI; and

1202: the network device transmits second information to the terminal equipment, the second information being at least used for indicating and/or triggering and/or activating at least one of the L sub-configurations.

As shown in FIG. 12, in some embodiments, the method further includes:

1203: the network device receives a CSI reporting corresponding to the indicated and/or triggered and/or activated at least one sub-configuration transmitted by the terminal equipment based on the first information and/or the second information.

It is worth noting that FIG. 12 above only schematically illustrates the embodiments of the present application, but the present application is not limited to this. For example, the order of execution between operations may be adjusted appropriately, and some other operations may be added or one or more operations may be removed. Those skilled in the art may make appropriate variations in accordance with the above contents, and which is not limited to the disclosure of FIG. 12 above.

In some embodiments, the first information is carried by RRC signaling; the CSI report configuration is for PUCCH based semi-persistent CSI reporting.

In some embodiments, the second information is carried by an MAC CE.

In some embodiments, the second information contains an LCID with a codepoint or an index greater than or equal to 35 and smaller than or equal to 46, or the second information contains an eLCID with a codepoint greater than or equal to 0 and smaller than or equal to 226 and/or an index greater than or equal to 64 and smaller than or equal to 290.

In some embodiments, the MAC CE includes one first field and one or more second fields, the first field is used to indicate a CSI report configuration ID, and the second field is used to indicate whether a sub-configuration of the CSI report configuration ID is indicated/triggered/activated.

In some embodiments, a width of one first field is Y bits; one second field is 1 bit;

the number of the one or more second fields is less than or equal to the number of the sub-configuration of the CSI report configuration ID, and the second fields correspond sequentially to the sub-configurations of the CSI report configuration ID in order of the indexes; one value of one of the second fields indicates that corresponding sub-configuration is activated, while the other value thereof indicates that the corresponding sub-configuration is deactivated.

In some embodiments, the MAC CE includes one or more second fields, which are used to indicate whether one sub-configuration of the CSI report configuration ID is activated.

In some embodiments, one second field is 1 bit;

the number of the one or more second fields is less than or equal to the number of the sub-configuration of the CSI report configuration ID, and the second fields correspond sequentially to the sub-configurations of the CSI report configuration ID in order of the indexes; one value of one of the second fields indicates that corresponding sub-configuration is activated, while the other value thereof indicates that the corresponding sub-configuration is deactivated.

In some embodiments, the MAC CE includes a plurality of first fields and a plurality of second fields, wherein the plurality of first fields are used to indicate a plurality of CSI report configuration IDs, and sub-configurations of the CSI report configuration IDs are indicated as being activated or deactivated by their respective second fields.

In some embodiments, the MAC CE includes one first field, one or more third fields, and one fourth field. The first field is used to indicate the CSI report configuration ID, the one third field is used to indicate one sub-configuration ID of the CSI report configuration ID, and the fourth field is used to indicate whether the sub-configuration is activated or deactivated.

In some embodiments, the fourth field is 1 bit;
one value of the fourth field indicates that sub-configurations corresponding to one or more sub-configuration IDs are all activated, and another value indicates that the sub-configurations corresponding to the one or more sub-configuration IDs are all deactivated.

In some embodiments, the MAC CE includes one first field and one or more third fields; the first field is used to indicate a CSI report configuration ID, and one of the third fields is used to indicate a sub-configuration ID of the CSI report configuration ID.

In some embodiments, the sub-configurations corresponding to one or more sub-configuration IDs are all activated, or the sub-configurations corresponding to the one or more sub-configuration IDs are all deactivated.

In some embodiments, the MAC CE includes one or more third fields and one fourth field, one of the third fields is used to indicate one or more sub-configuration IDs of the CSI report configuration ID, the fourth field is used to indicate whether the sub-configuration is activated or deactivated, and the CSI report configuration ID is predefined or pre-configured and includes a plurality of sub-configurations.

In some embodiments, the fourth field is 1 bit;
one value of the fourth field indicates that sub-configurations corresponding to the one or more sub-configuration IDs are all activated, and another value indicates that the sub-configurations corresponding to the one or more sub-configuration IDs are all deactivated.

In some embodiments, the MAC CE includes one first field and one or more third fields, the one first field is used to indicate one CSI report configuration ID, one of the third fields is used to indicate one sub-configuration ID of the CSI report configuration ID, and the CSI report configuration ID is predefined or pre-configured and includes a plurality of sub-configurations.

In some embodiments, the sub-configurations corresponding to the one or more sub-configuration IDs are all activated, or the sub-configurations corresponding to the one or more sub-configuration IDs are all deactivated.

In some embodiments, the MAC CE includes or corresponds to a plurality of first fields and a plurality of third fields, one of the first fields is used to indicate one CSI report configuration ID, one of the third fields is used to indicate one sub-configuration ID of the CSI report configuration ID, and one CSI report configuration ID corresponds to one or more sub-configuration IDs,
wherein sub-configurations of a plurality of CSI report configuration IDs are indicated as being activated or deactivated by one fourth field, or the sub-configurations of the plurality of CSI report configuration IDs are defaulted as being activated or deactivated.

In some embodiments, the MAC CE further includes one or more fifth fields for indicating whether the CSI report configuration is activated.

The embodiments above only schematically illustrate the present application, but the present application is not limited to this, and appropriate variations can also be made on the basis of the above embodiments. For example, the above embodiments may be used separately, or one or more of the above embodiments may be combined.

As can be seen from the above embodiments, even in some scenarios of wireless communication applications (such as energy-saving mode), the network device may efficiently and accurately indicate the CSI report configuration to the terminal equipment, CSI reporting overhead and uplink resources may be saved.

Embodiments of Third Aspect

The embodiments of the present application provide an apparatus for indicating a channel state information report configuration. The apparatus may be, for example, a terminal equipment, or one or more parts or components configured in the terminal equipment, and the same content as the embodiments of the first aspect will not be repeated.

FIG. 13 is a schematic diagram of an apparatus for indicating a channel state information report configuration in an embodiment of the present application. As shown in FIG. 13, an apparatus 1300 for indicating a channel state information report configuration, includes:

a first receiving unit 1301 configured to receive first information from a network device, the first information at least including L sub-configurations of a CSI report configuration, and one of the L sub-configurations corresponding to one piece of CSI; and a second receiving unit 1302 configured to receive second information from the network device, the second information being at least used for indicating and/or triggering and/or activating at least one of the L sub-configurations.

As shown in FIG. 13, in some embodiments, the apparatus further includes:

a transmitting unit 1303 configured to transmit a CSI reporting corresponding to the indicated and/or triggered and/or activated at least one sub-configuration to the network device based on the first information and/or the second information.

In some embodiments, the first information is carried by RRC signaling; the CSI report configuration is for PUCCH based semi-persistent CSI reporting.

In some embodiments, the second information is carried by an MAC CE;

the second information contains an LCID with a codepoint or an index greater than or equal to 35 and smaller than or equal to 46, or the second information contains an eLCID with a codepoint greater than or equal to 0 and smaller than or equal to 226 and/or an index greater than or equal to 64 and smaller than or equal to 290.

In some embodiments, the MAC CE includes one first field and one or more second fields, the first field is used to indicate a CSI report configuration ID, and the second field is used to indicate whether a sub-configuration of the CSI report configuration ID is indicated/triggered/activated.

In some embodiments, a width of one first field is Y bits; one second field is 1 bit;

the number of the one or more second fields is less than or equal to the number of the sub-configuration of the CSI report configuration ID, and the second fields correspond sequentially to the sub-configurations of the CSI report configuration ID in order of the indexes; one value of one of the second fields indicates that corresponding sub-configuration is activated, while the other value thereof indicates that the corresponding sub-configuration is deactivated.

In some embodiments, the MAC CE includes one or more second fields, which are used to indicate whether one sub-configuration of the CSI report configuration ID is activated.

In some embodiments, one second field is 1 bit;

the number of the one or more second fields is less than or equal to the number of the sub-configuration of the CSI report configuration ID, and the second fields correspond sequentially to the sub-configurations of the CSI report configuration ID in order of the indexes; one value of one of the second fields indicates that corresponding sub-configuration is activated, while the other value thereof indicates that the corresponding sub-configuration is deactivated.

In some embodiments, the MAC CE includes a plurality of first fields and a plurality of second fields, wherein the plurality of first fields are used to indicate a plurality of CSI report configuration IDs, and sub-configurations of the CSI report configuration IDs are indicated as being activated or deactivated by their respective second fields.

In some embodiments, the MAC CE includes one first field, one or more third fields, and one fourth field. The first field is used to indicate the CSI report configuration ID, the one third field is used to indicate one sub-configuration ID of the CSI report configuration ID, and the fourth field is used to indicate whether the sub-configuration is activated or deactivated.

In some embodiments, the fourth field is 1 bit;

one value of the fourth field indicates that sub-configurations corresponding to one or more sub-configuration IDs are all activated, and another value indicates that the sub-configurations corresponding to the one or more sub-configuration IDs are all deactivated.

In some embodiments, the MAC CE includes one first field and one or more third fields; the first field is used to indicate a CSI report configuration ID, and one of the third fields is used to indicate a sub-configuration ID of the CSI report configuration ID.

In some embodiments, the sub-configurations corresponding to one or more sub-configuration IDs are all activated, or the sub-configurations corresponding to the one or more sub-configuration IDs are all deactivated.

In some embodiments, the MAC CE includes one or more third fields and one fourth field, one of the third fields is used to indicate one or more sub-configuration IDs of the CSI report configuration ID, the fourth field is used to indicate whether the sub-configuration is activated or deactivated, and the CSI report configuration ID is predefined or pre-configured and includes a plurality of sub-configurations.

In some embodiments, the fourth field is 1 bit;

one value of the fourth field indicates that sub-configurations corresponding to the one or more sub-configuration IDs are all activated, and another value indicates that the sub-configurations corresponding to the one or more sub-configuration IDs are all deactivated.

In some embodiments, the MAC CE includes one first field and one or more third fields, the one first field is used to indicate one CSI report configuration ID, one of the third fields is used to indicate one sub-configuration ID of the CSI report configuration ID, and the CSI report configuration ID is predefined or pre-configured and includes a plurality of sub-configurations;

the sub-configurations corresponding to one or more sub-configuration IDs are all activated, or the sub-configurations corresponding to the one or more sub-configuration IDs are all deactivated.

In some embodiments, the MAC CE includes or corresponds to a plurality of first fields and a plurality of third fields, one of the first fields is used to indicate one CSI report configuration ID, one of the third fields is used to indicate one sub-configuration ID of the CSI report configuration ID, and one CSI report configuration ID corresponds to one or more sub-configuration IDs,

wherein sub-configurations of a plurality of CSI report configuration IDs are indicated as being activated or deactivated by one fourth field, or the sub-configurations of the plurality of CSI report configuration IDs are defaulted as being activated or deactivated.

In some embodiments, the MAC CE further includes one or more fifth fields for indicating whether the CSI report configuration is activated.

It is worth noting that only the components or modules related to the present application are illustrated hereinabove, but the present application is not limited to this. The apparatus 1300 for indicating a channel state information report configuration may further include other components or modules, and the details of these components or modules can be seen by referring to the related art.

In addition, for the sake of simplicity, FIG. 13 only illustratively shows the connection relationship or signal trend between the individual components or modules, but it should be clear to those skilled in the art that various related techniques such as bus connections may be employed. The above individual components or modules may be implemented by hardware facilities such as a processor, a memory, a transmitter, a receiver, etc., which is not limited in the present application.

With the embodiments of the present application, even in some scenarios of wireless communication applications (such as energy-saving mode), the network device may efficiently and accurately indicate the CSI report configuration of the terminal equipment, CSI reporting overhead and uplink resources may be saved.

Embodiments of Fourth Aspect

The embodiments of the present application provide an apparatus for indicating a channel state information report configuration. The apparatus may be, for example, a network device, or one or more parts or components configured in the network device, and the same content as the embodiments of the first and second aspects will not be repeated.

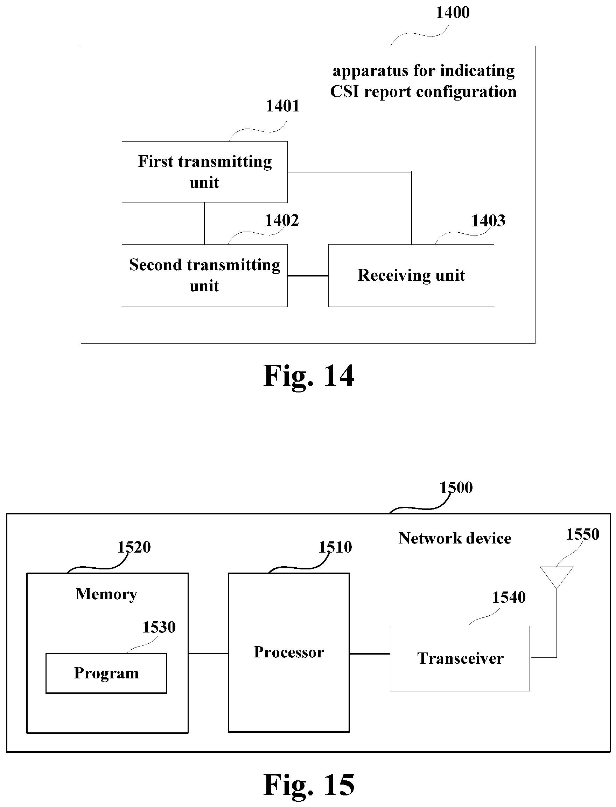

FIG. 14 is a schematic diagram of an apparatus for indicating a channel state information report configuration in an embodiment of the present application. As shown in FIG. 14, an apparatus 1400 for indicating a channel state information report configuration, includes:

a first transmitting unit 1401 configured to transmit first information to a terminal equipment, the first information at least including L sub-configurations of a CSI report configuration, and one of the L sub-configurations corresponding to one piece of CSI; and

a second transmitting unit 1402 configured to transmit second information to the terminal equipment, the second information being at least used for indicating and/or triggering and/or activating at least one of the L sub-configurations.

As shown in FIG. 14, in some embodiments, the apparatus further includes:

a receiving unit 1403 configured to receive a CSI reporting corresponding to the indicated and/or triggered and/or activated at least one sub-configuration transmitted by the terminal equipment based on the first information and/or the second information.

In some embodiments, the first information is carried by RRC signaling; the CSI report configuration is for PUCCH based semi-persistent CSI reporting.

In some embodiments, the second information is carried by an MAC CE.

In some embodiments, the second information contains an LCID with a codepoint or an index greater than or equal to 35 and smaller than or equal to 46, or the second information contains an eLCID with a codepoint greater than or equal to 0 and smaller than or equal to 226 and/or an index greater than or equal to 64 and smaller than or equal to 290.

In some embodiments, the MAC CE includes one first field and one or more second fields, the first field is used to indicate a CSI report configuration ID, and the second field is used to indicate whether a sub-configuration of the CSI report configuration ID is indicated/triggered/activated.

In some embodiments, a width of one first field is Y bits; one second field is 1 bit; the number of the one or more second fields is less than or equal to the number of the sub-configuration of the CSI report configuration ID, and the second fields correspond sequentially to the sub-configurations of the CSI report configuration ID in order of the indexes; one value of one of the second fields indicates that corresponding sub-configuration is activated, while the other value thereof indicates that the corresponding sub-configuration is deactivated.

In some embodiments, the MAC CE includes one or more second fields, which are used to indicate whether one sub-configuration of the CSI report configuration ID is activated.

In some embodiments, one second field is 1 bit;
the number of the one or more second fields is less than or equal to the number of the sub-configuration of the CSI report configuration ID, and the second fields correspond sequentially to the sub-configurations of the CSI report configuration ID in order of the indexes; one value of one of the second fields indicates that corresponding sub-configuration is activated, while the other value thereof indicates that the corresponding sub-configuration is deactivated.

In some embodiments, the MAC CE includes a plurality of first fields and a plurality of second fields, wherein the plurality of first fields are used to indicate a plurality of CSI report configuration IDs, and sub-configurations of the CSI report configuration IDs are indicated as being activated or deactivated by their respective second fields.

In some embodiments, the MAC CE includes one first field, one or more third fields, and one fourth field. The first field is used to indicate the CSI report configuration ID, the one third field is used to indicate one sub-configuration ID of the CSI report configuration ID, and the fourth field is used to indicate whether the sub-configuration is activated or deactivated.

In some embodiments, the fourth field is 1 bit;
one value of the fourth field indicates that sub-configurations corresponding to one or more sub-configuration IDs are all activated, and another value indicates that the sub-configurations corresponding to the one or more sub-configuration IDs are all deactivated.

In some embodiments, the MAC CE includes one first field and one or more third fields; the first field is used to indicate a CSI report configuration ID, and one of the third fields is used to indicate a sub-configuration ID of the CSI report configuration ID.

In some embodiments, the sub-configurations corresponding to one or more sub-configuration IDs are all activated, or the sub-configurations corresponding to the one or more sub-configuration IDs are all deactivated.

In some embodiments, the MAC CE includes one or more third fields and one fourth field, one of the third fields is used to indicate one or more sub-configuration IDs of the CSI report configuration ID, the fourth field is used to indicate whether the sub-configuration is activated or deactivated, and the CSI report configuration ID is predefined or pre-configured and includes a plurality of sub-configurations.

In some embodiments, the fourth field is 1 bit;
one value of the fourth field indicates that sub-configurations corresponding to the one or more sub-configuration IDs are all activated, and another value indicates that the sub-configurations corresponding to the one or more sub-configuration IDs are all deactivated.

In some embodiments, the MAC CE includes one first field and one or more third fields, the one first field is used to indicate one CSI report configuration ID, one of the third fields is used to indicate one sub-configuration ID of the CSI report configuration ID, and the CSI report configuration ID is predefined or pre-configured and includes a plurality of sub-configurations.

In some embodiments, the sub-configurations corresponding to the one or more sub-configuration IDs are all activated, or the sub-configurations corresponding to the one or more sub-configuration IDs are all deactivated.

In some embodiments, the MAC CE includes or corresponds to a plurality of first fields and a plurality of third fields, one of the first fields is used to indicate one CSI report configuration ID, one of the third fields is used to indicate one sub-configuration ID of the CSI report configuration ID, and one CSI report configuration ID corresponds to one or more sub-configuration IDs,
wherein sub-configurations of a plurality of CSI report configuration IDs are indicated as being activated or deactivated by one fourth field, or the sub-configurations of the plurality of CSI report configuration IDs are defaulted as being activated or deactivated.

In some embodiments, the MAC CE further includes one or more fifth fields for indicating whether the CSI report configuration is activated.

It is worth noting that only the components or modules related to the present application are illustrated hereinabove, but the present application is not limited to this. The apparatus 1400 for indicating a channel state information report configuration may further include other components or modules, and the details of these components or modules can be seen by referring to the related art.

In addition, for the sake of simplicity, FIG. 14 only illustratively shows the connection relationship or signal trend between the individual components or modules, but it should be clear to those skilled in the art that various related techniques such as bus connections may be employed. The above individual components or modules may be implemented by hardware facilities such as a processor, a memory, a transmitter, a receiver, etc., which is not limited in the present application.

With the embodiments of the present application, even in some scenarios of wireless communication applications (such as energy-saving mode), the network device may efficiently and accurately indicate the CSI report configuration of the terminal equipment, CSI reporting overhead and uplink resources may be saved.

Embodiments of Fifth Aspect

The embodiments of the present application further provide a communication system, referring to FIG. 1, the same content as the embodiments in the first to fourth aspects will not be repeated.

In some embodiments, the communication system 100 may include at least:

a network device configured to transmit first information, the first information at least including L sub-configurations of a channel state information (CSI) report configuration, and one of the L sub-configurations corresponding to one CSI; and transmit second information, the second information being at least used for indicating and/or triggering and/or activating at least one of the L sub-configurations; and
a terminal equipment configured to receive the first information and/or the second information.

The embodiments of the present application further provide a network device, which may be, for example, a base station, but which is not limited in the present application, and may also be other network devices.

FIG. 15 is a schematic diagram of composition of the network device in an embodiment of the present application. As shown in FIG. 15, the network device 1500 may include a processor 1510 (such as a central processing unit (CPU)) and a memory 1520; the memory 1520 is coupled to the processor 1510. The memory 1520 may store various data and also may store the information processing program 1530, and the program 1530 is executed under the control of the processor 1510.

For example, the processor 1510 may be configured to execute the program to implement the method for indicating a channel state information report configuration as described in the embodiments of the second aspect. For example, the processor 1510 may be configured to perform the following controls of: transmitting first information to a terminal equipment, the first information at least including L sub-configurations of a CSI report configuration, and one of the L sub-configurations corresponding to one piece of CSI; and transmitting second information to the terminal equipment, the second information being at least used for indicating and/or triggering and/or activating at least one of the L sub-configurations.

In addition, as shown in FIG. 15, the network device 1500 may further include: a transceiver 1540 and an antenna 1550, etc., wherein the functions of the above components are similar to the relevant art, and will not be repeated here. It is worth noting that the network device 1500 is not necessarily required to include all of the components shown in FIG. 15; in addition, the network device 1500 may further include components not shown in FIG. 15, with reference to the relevant art.

The embodiments of the present application further provide a terminal equipment, but which is not limited in the present application, and may also be other devices.

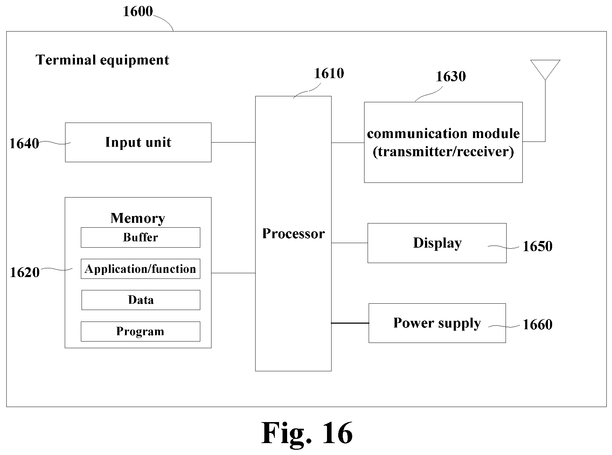

FIG. 16 is a schematic diagram of a terminal equipment in an embodiment of the present application. As shown in FIG. 16, the terminal equipment 1600 may include a processor 1610 and a memory 1620; the memory 1620 stores data and program, and is coupled to the processor 1610. It is worth noting that this figure is exemplary; other types of structures may also be used in addition to or instead of the structure to implement telecommunications functions or other functions.

For example, the processor 1610 may be configured to execute the program to implement the method for indicating a channel state information report configuration as described in the embodiments of the first aspect. For example, the processor 1610 may be configured to perform the following controls of: receiving first information from a network device, the first information at least including L sub-configurations of a CSI report configuration, and one of the L sub-configurations corresponding to one piece of CSI; and receiving second information from the network device, the second information being at least used for indicating and/or triggering and/or activating at least one of the L sub-configurations.

As shown in FIG. 16, the terminal equipment 1600 may further include a communication module 1630, an input unit 1640, a display 1650, and a power supply 1660. The functions of the above components are similar to the relevant art, and will not be repeated here. It is worth noting that the terminal equipment 1600 is not necessarily required to include all of the components shown in FIG. 16, and the above components are not essential; in addition, the terminal equipment 1600 may further include components not shown in FIG. 16, with reference to the relevant art.

An embodiment of the present application further provides a computer program which, when being executed in the terminal equipment, causes the terminal equipment to execute the method for indicating a channel state information report configuration described in the embodiments of the first aspect.

An embodiment of the present application further provides a storage medium storing a computer program which causes the terminal equipment to execute the method for indicating a channel state information report configuration described in the embodiments of the first aspect.

An embodiment of the present application further provides a computer program which, when being executed in the network device, causes the network device to execute the method for indicating a channel state information report configuration described in the embodiments of the second aspect.

An embodiment of the present application further provides a storage medium storing a computer program which causes the network device to execute the method for indicating a channel state information report configuration described in the embodiments of the second aspect.

The above devices and methods of the present application can be implemented by hardware or by hardware combined with software. The present application relates to a computer readable program which, when being executed by a logic unit, enables the logic unit to implement the devices or components mentioned above, or enables the logic unit to implement the methods or steps described above. The present application also relates to storage medium for storing the above programs, such as a hard disk, a magnetic disk, a compact disc, a DVD, a flash memory, etc.

The method/device described in conjunction with the embodiments of the present application may be directly embodied as hardware, a software module executed by the processor, or a combination of both. For example, one or more of the functional block diagrams and/or combination thereof shown in the drawing may correspond to both software modules and hardware modules of the computer program flow. These software modules can correspond to the steps shown in the drawings respectively. These hardware modules can be realized, for example, by solidifying these software modules using field programmable gate arrays (FPGA).

The software module may reside in an RAM memory, a flash memory, an ROM memory, an EPROM memory, an EEPROM memory, a register, a hard disk, a removable disk, a CD-ROM, or a storage medium in any other form known in the art. A storage medium can be coupled to a processor so that the processor can read information from the storage medium and write information to the storage medium; or the storage medium can be a constituent part of the processor. The processor and the storage medium can be located in the ASIC. The software module can be stored in the memory of the mobile terminal or in a memory card that can be inserted into the mobile terminal. For example, if a device (such as a mobile terminal) uses a large-capacity MEGA-SIM card or a large-capacity flash memory device, the software module can be stored in the MEGA-SIM card or the large-capacity flash memory device.

One or more of the functional blocks and/or combination thereof shown in the drawing may be implemented as a general-purpose processor, a digital signal processor (DSP), an application-specific integrated circuit (ASIC), a field programmable gate array (FPGA) or other programmable logic device, a discrete gate or a transistor logic device, a discrete hardware component, or any appropriate combination thereof, for performing the functions described in the present application. One or more of the functional blocks and/or combination thereof shown in the drawing may also be implemented as combination of computing devices, such as combination of DSP and a microprocessor, multiple microprocessors, one or more microprocessors combined with DSP communication, or any other such configuration.

The present application is described in combination with specific embodiments hereinabove, but a person skilled in the art should know clearly that the description is exemplary, but not limitation to the protection scope of the present application. A person skilled in the art can make various variations and modifications to the present application according to spirit and principle of the application, and these variations and modifications should also be within the scope of the present application.

For implementation including the above embodiments, the following supplements are further disclosed:

1. A method for indicating a channel state information (CSI) report configuration, including:

a terminal equipment receives first information from a network device, the first information at least including L sub-configurations of a CSI report configuration, and one of the L sub-configurations corresponding to one piece of CSI; and
the terminal equipment receives second information from the network device, the second information being at least used for indicating and/or triggering and/or activating at least one of the L sub-configurations.

2. The method according to the supplement 1, wherein the method further includes:
the terminal equipment transmits a CSI reporting corresponding to the indicated and/or triggered and/or activated at least one sub-configuration to the network device based on the first information and/or the second information.

3. The method according to the supplement 1 or 2, wherein the first information is carried by RRC signaling; the CSI report configuration is for PUCCH based semi-persistent CSI reporting.

4. The method according to any one of the supplements 1 to 3, wherein the L sub-configurations are configured by a radio resource control signaling; the maximum value of the L depends on a capability of the terminal equipment, the maximum value of the L is configured by the radio resource control signaling or is determined based on predefinition.

5. The method according to any one of the supplements 1 to 4, wherein one sub-configuration of the L sub-configurations at least contains a sub-configuration index/ID to represent the one sub-configuration,
wherein the sub-configuration to which a minimum value of the index/ID corresponds is a reference sub-configuration, and the reference sub-configuration corresponds to at least: the maximum number of ports, and/or a *nrOfport* value in CSI-RS resource configuration, and/or a *powerControlOffset* value in the CSI-RS resource configuration.

6. The method according to any one of the supplements 1 to 5, wherein one of the L sub-configurations contains at least a first parameter which includes Type 1 spatial-domain adaptation related parameters and/or Type 1 energy-domain adaptation related parameters;

or one of the L sub-configurations contains at least a second parameter which includes Type 2 spatial-domain adaptation related parameters or Type 2 energy-domain adaptation related parameters.

7. The method according to the supplement 6, wherein the Type 1 spatial-domain adaptation related parameters are related to network energy saving and are used for Type 1 spatial-domain adaptation using a second resource configuration type (e.g. A1-2-revised type),

the Type 1 spatial-domain adaptation related parameters include: N1, N2 information for a single-antenna panel, and/or N1, N2, Ng information for a multi-antenna panel, and/or, port subset indication information based on a bitmap, wherein one bit of the bitmap corresponds to one port; and/or, codebook subset restriction information; and/or, rank restriction information.

8. The method according to the supplement 6, wherein the Type 1 energy-domain adaptation related parameters are related to network energy saving and are used for Type 1 energy-domain adaptation using a second resource configuration type (e.g. A1-2-revised type),

the Type 1 energy-domain adaptation related parameters include one or more power offsets (*powerControlOffset*), wherein one power offset (*powerControlOffset*) corresponds to one CSI-RS resource in an associated CSI resource set, and the number of the power offsets (*powerControlOffset*) is the same as the number of the CSI-RS resources in the associated CSI resource set;

or, the Type 1 energy-domain adaptation related parameters include an offset quantity of one power offset (*powerControlOffset*), and the offset quantity of the power offset (*powerControlOffset*) corresponds to all CSI-RS resources in the associated CSI resource set;

or, the Type 1 energy-domain adaptation related parameters include one power offset (*powerControlOffset*) index value, and the power offset index value corresponds to all CSI-RS resources in the associated CSI resource set.

9. The method according to the supplement 6, wherein the Type 2 spatial-domain adaptation related parameters are related to network energy saving and are used for Type 2 spatial-domain adaptation using a first resource configuration type (e.g. A1-1-revised type),

the Type 2 spatial-domain adaptation related parameters include at least one CSI-RS resource ID list, which includes one CSI-RS resource ID or a plurality of CSI-RS resource IDs; one sub-configuration is associated with at least one CSI-RS resource ID.

10. The method according to the supplement 6, wherein the Type 2 energy-domain adaptation related parameters are related to network energy saving and are used for Type 2 energy-domain adaptation using a first resource configuration type (e.g. A1-1-revised type),

the Type 2 energy-domain adaptation related parameters include at least one CSI-RS resource ID list, which includes one CSI-RS resource ID or a plurality of CSI-RS resource IDs; one sub-configuration is associated with at least one CSI-RS resource ID.

11. The method according to the supplement 6, wherein the Type 2 spatial-domain adaptation related parameters are the same as the Type 2 energy-domain adaptation related parameters.

12. The method according to the supplement 6, wherein the second parameter includes one CSI-RS resource ID list, which is used for both Type 2 spatial-domain adaptation and Type 2 energy-domain adaptation.

13. The method according to the supplement 6, wherein the first parameter includes the Type 1 spatial-domain adaptation related parameters and the Type 1 energy-domain adaptation related parameters, used to represent Type 1 spatial-domain and Type 1 energy-domain joint adjustment.

14. The method according to the supplement 6, wherein the first parameter includes the Type 1 spatial-domain adaptation related parameters, used to represent Type 1 spatial-domain adaptation;

or, the first parameter includes the Type 1 energy-domain adaptation related parameters, used to represent Type 1 energy-domain adaptation.

15. The method according to the supplement 6, wherein one sub-configuration does not include both the first parameter and the second parameter, that is, one sub-configuration does not include both the Type 1 spatial-domain adaptation related parameter and the Type 2 spatial-domain adaptation related parameter;

or, one sub-configuration does not include both the Type 1 energy-domain adaptation related parameter and the Type 2 energy-domain adaptation related parameter.

16. The method according to any one of the supplements 1 to 3, wherein the second information is carried by an MAC CE.

17. The method according to the supplement 16, wherein the second information contains an LCID with a codepoint or an index greater than or equal to 35 and smaller than or equal to 46, or the second information contains an eLCID with a codepoint greater than or equal to 0 and smaller than or equal to 226 and/or an index greater than or equal to 64 and smaller than or equal to 290.

18. The method according to the supplement 16 or 17, wherein the MAC CE includes one first field and one or more second fields, the first field is used to indicate a CSI report configuration ID, and the second field is used to indicate whether a sub-configuration of the CSI report configuration ID is indicated/triggered/activated.

19. The method according to the supplement 18, wherein a width of the one first field is Y bits; one of the second fields is 1 bit;

the number of the one or more second fields is less than or equal to the number of the sub-configuration of the CSI report configuration ID, and the second fields correspond sequentially to the sub-configurations of the CSI report configuration ID in order of the indexes; one value of one of the second fields indicates that corresponding sub-configuration is activated, while the other value thereof indicates that the corresponding sub-configuration is deactivated.

20. The method according to the supplement 16 or 17, wherein the MAC CE includes one or more second fields, which are used to indicate whether one sub-configuration of the CSI report configuration ID is activated.

21. The method according to the supplement 20, wherein one second field is 1 bit;

the number of the one or more second fields is less than or equal to the number of the sub-configuration of the CSI report configuration ID, and the second fields correspond sequentially to the sub-configurations of the CSI report configuration ID in order of the indexes; one value of one of the second fields indicates that corresponding sub-configuration is activated, while the other value thereof indicates that the corresponding sub-configuration is deactivated.

22. The method according to any one of the supplements 18 to 21, wherein the MAC CE includes a plurality of first fields and a plurality of second fields, wherein the plurality of first fields are used to indicate a plurality of CSI report configuration IDs, and sub-configurations of the CSI report configuration IDs are indicated as being activated or deactivated by their respective second fields.

23. The method according to the supplement 16 or 17, wherein the MAC CE includes one first field, one or more third fields and one fourth field; the first field is used to indicate a CSI report configuration ID, one of the third fields is used to indicate one sub-configuration ID of the CSI report configuration ID, and the fourth field is used to indicate whether the sub-configuration is activated or deactivated.

24. The method according to the supplement 23, wherein the fourth field is 1 bit;

one value of the fourth field indicates that sub-configurations corresponding to one or more sub-configuration IDs are all activated, and another value indicates that the sub-configurations corresponding to the one or more sub-configuration IDs are all deactivated.

25. The method according to the supplement 16 or 17, wherein the MAC CE includes one first field and one or more third fields; the first field is used to indicate a CSI report configuration ID, and one of the third fields is used to indicate a sub-configuration ID of the CSI report configuration ID.

26. The method according to the supplement 25, wherein sub-configurations corresponding to one or more sub-configuration IDs are all activated, or the sub-configurations corresponding to the one or more sub-configuration IDs are all deactivated.

27. The method according to the supplement 16 or 17, wherein the MAC CE includes one or more third fields and one fourth field, one of the third fields is used to indicate one or more sub-configuration IDs of the CSI report configuration ID, the fourth field is used to indicate whether the sub-configuration is activated or deactivated, and the CSI report configuration ID is predefined or pre-configured and includes a plurality of sub-configurations.

28. The method according to the supplement 27, wherein the fourth field is 1 bit;

one value of the fourth field indicates that sub-configurations corresponding to the one or more sub-configuration IDs are all activated, and another value indicates that the sub-configurations corresponding to the one or more sub-configuration IDs are all deactivated.

29. The method according to the supplement 16 or 17, wherein the MAC CE includes one first field and one or more third fields, the one first field is used to indicate one CSI report configuration ID, one of the third fields is used to indicate one sub-configuration ID of the CSI report configuration ID, and the CSI report configuration ID is predefined or pre-configured and includes a plurality of sub-configurations.

30. The method according to the supplement 29, wherein sub-configurations corresponding to the one or more sub-configuration IDs are all activated, or the sub-configurations corresponding to the one or more sub-configuration IDs are all deactivated.

31. The method according to any one of the supplements 23 to 30, wherein the MAC CE includes or corresponds to a plurality of first fields and a plurality of third fields, one of the first fields is used to indicate one CSI report configuration ID, one of the third fields is used to indicate one sub-configuration ID of the CSI report configuration ID, and one CSI report configuration ID corresponds to one or more sub-configuration IDs,

wherein sub-configurations of a plurality of CSI report configuration IDs are indicated as being activated or deactivated by one fourth field, or the sub-configurations of the plurality of CSI report configuration IDs are defaulted as being activated or deactivated.

32. The method according to any one of the supplements 16 to 31, wherein the MAC CE further includes one or more fifth fields for indicating whether the CSI report configuration is activated.

33. A method for indicating a channel state information (CSI) report configuration, including:

a network device transmits first information to a terminal equipment, the first information at least including L sub-configurations of a CSI report configuration, and one of the L sub-configurations corresponding to one piece of CSI; and

the network device transmits second information to the terminal equipment, the second information being at least used for indicating and/or triggering and/or activating at least one of the L sub-configurations.

34. The method according to the supplement 33, wherein the method further includes:

the network device receives a CSI reporting corresponding to the indicated and/or triggered and/or activated at least one sub-configuration transmitted by the terminal equipment based on the first information and/or the second information.

35. The method according to the supplement 33 or 34, wherein the first information is carried by RRC signaling; the CSI report configuration is for PUCCH based semi-persistent CSI reporting.

36. The method according to any one of the supplements 32 to 35, wherein the L sub-configurations are configured by a radio resource control signaling; the maximum value of the L depends on a capability of the terminal equipment, the maximum value of the L is configured by the radio resource control signaling or is determined based on predefinition.

37. The method according to any one of the supplements 32 to 36, wherein one sub-configuration of the L sub-configurations at least contains a sub-configuration index/ID to represent the one sub-configuration,

wherein the sub-configuration to which a minimum value of the index/ID corresponds is a reference sub-configuration, and the reference sub-configuration corresponds to at least: the maximum number of ports, and/or a *nrOfport* value in CSI-RS resource configuration, and/or a *powerControlOffset* value in the CSI-RS resource configuration.

38. The method according to any one of the supplements 32 to 37, wherein one of the L sub-configurations contains at least a first parameter which includes Type 1 spatial-domain adaptation related parameters and/or Type 1 energy-domain adaptation related parameters;

or one of the L sub-configurations contains at least a second parameter which includes Type 2 spatial-domain adaptation related parameters or Type 2 energy-domain adaptation related parameters.

39. The method according to the supplement 38, wherein the Type 1 spatial-domain adaptation related parameters are related to network energy saving and are used for Type 1 spatial-domain adaptation using a second resource configuration type (e.g. A1-2-revised type),

the Type 1 spatial-domain adaptation related parameters include: N1, N2 information for a single-antenna panel, and/or N1, N2, Ng information for a multi-antenna panel, and/or, port subset indication information based on a bitmap, wherein one bit of the bitmap corresponds to one port; and/or, codebook subset restriction information; and/or, rank restriction information.

40. The method according to the supplement 38, wherein the Type 1 energy-domain adaptation related parameters are related to network energy saving and are used for Type 1 energy-domain adaptation using a second resource configuration type (e.g. A1-2-revised type),

the Type 1 energy-domain adaptation related parameters include one or more power offsets (*powerControlOffset*), wherein one power offset (*powerControlOffset*) corresponds to one CSI-RS resource in the associated CSI resource set, and the number of the power offsets (*powerControlOffset*) is the same as the number of the CSI-RS resources in the associated CSI resource set;

or, the Type 1 energy-domain adaptation related parameters include an offset quantity of one power offset (*powerControlOffset*), and the offset quantity of the power offset (*powerControlOffset*) corresponds to all CSI-RS resources in the associated CSI resource set;

or, the Type 1 energy-domain adaptation related parameters include one power offset (*powerControlOffset*) index value, and the power offset index value corresponds to all CSI-RS resources in the associated CSI resource set.

41. The method according to the supplement 38, wherein the Type 2 spatial-domain adaptation related parameters are related to network energy saving and are used for Type 2 spatial-domain adaptation using a first resource configuration type (e.g. A1-1-revised type),

the Type 2 spatial-domain adaptation related parameters include at least one CSI-RS resource ID list, which includes one CSI-RS resource ID or a plurality of CSI-RS resource IDs; one sub-configuration is associated with at least one CSI-RS resource ID.

42. The method according to the supplement 38, wherein the Type 2 energy-domain adaptation related parameters are related to network energy saving and are used for Type 2 energy-domain adaptation using a first resource configuration type (e.g. A1-1-revised type),

the Type 2 energy-domain adaptation related parameters include at least one CSI-RS resource ID list, which includes one CSI-RS resource ID or a plurality of CSI-RS resource IDs; one sub-configuration is associated with at least one CSI-RS resource ID.

43. The method according to the supplement 38, wherein the Type 2 spatial-domain adaptation related parameters are the same as the Type 2 energy-domain adaptation related parameters.

44. The method according to the supplement 38, wherein the second parameter includes one CSI-RS resource ID list, which is used for both Type 2 spatial-domain adaptation and Type 2 energy-domain adaptation.

45. The method according to the supplement 38, wherein the first parameter includes the Type 1 spatial-domain adaptation related parameters and the Type 1 energy-domain adaptation related parameters, used to represent Type 1 spatial-domain and Type 1 energy-domain joint adjustment.

46. The method according to the supplement 38, wherein the first parameter includes the Type 1 spatial-domain adaptation related parameters, used to represent Type 1 spatial-domain adaptation;

or, the first parameter includes the Type 1 energy-domain adaptation related parameters, used to represent Type 1 energy-domain adaptation.

47. The method according to the supplement 38, wherein one sub-configuration does not include both the first parameter and the second parameter, that is, one sub-configuration does not include both the Type 1 spatial-domain adaptation related parameter and the Type 2 spatial-domain adaptation related parameter;

or, one sub-configuration does not include both the Type 1 energy-domain adaptation related parameter and the Type 2 energy-domain adaptation related parameter.

48. The method according to any one of the supplements 33 to 47, wherein the second information is carried by an MAC CE.

49. The method according to the supplement 48, wherein the second information contains an LCID with a codepoint or an index greater than or equal to 35 and smaller than or equal to 46, or the second information contains an eLCID with a codepoint greater than or equal to 0 and smaller than or equal to 226 and/or an index greater than or equal to 64 and smaller than or equal to 290.

50. The method according to the supplement 48 or 49, wherein the MAC CE includes one first field and one or more second fields, the first field is used to indicate a CSI report configuration ID, and the second field is used to indicate whether a sub-configuration of the CSI report configuration ID is indicated/triggered/activated.

51. The method according to the supplement 50, wherein a width of the one first field is Y bits; one of the second fields is 1 bit;

the number of the one or more second fields is less than or equal to the number of the sub-configuration of the CSI report configuration ID, and the second fields correspond sequentially to the sub-configurations of the CSI report configuration ID in order of the indexes; one value of one of the second fields indicates that corresponding sub-configuration is activated, while the other value thereof indicates that the corresponding sub-configuration is deactivated.

52. The method according to the supplement 48 or 49, wherein the MAC CE includes one or more second fields, which are used to indicate whether one sub-configuration of the CSI report configuration ID is activated.

53. The method according to the supplement 52, wherein one second field is 1 bit;

the number of the one or more second fields is less than or equal to the number of the sub-configuration of the CSI report configuration ID, and the second fields correspond sequentially to the sub-configurations of the CSI report configuration ID in order of the indexes; one value of one of the second fields indicates that corresponding sub-configuration is activated, while the other value thereof indicates that the corresponding sub-configuration is deactivated.

54. The method according to any one of the supplements 50 to 53, wherein the MAC CE includes a plurality of first fields and a plurality of second fields, wherein the plurality of first fields are used to indicate a plurality of CSI report configuration IDs, and sub-configurations of the CSI report configuration IDs are indicated as being activated or deactivated by their respective second fields.

55. The method according to the supplement 48 or 49, wherein the MAC CE includes one first field, one or more third fields and one fourth field; the first field is used to indicate a CSI report configuration ID, one of the third fields is used to indicate one sub-configuration ID of the CSI report configuration ID, and the fourth field is used to indicate whether the sub-configuration is activated or deactivated.

56. The method according to the supplement 55, wherein the fourth field is 1 bit;

one value of the fourth field indicates that sub-configurations corresponding to one or more sub-configuration IDs are all activated, and another value indicates that the sub-configurations corresponding to the one or more sub-configuration IDs are all deactivated.

57. The method according to the supplement 48 or 49, wherein the MAC CE includes one first field and one or more third fields; the first field is used to indicate a CSI report configuration ID, and one of the third fields is used to indicate a sub-configuration ID of the CSI report configuration ID.

58. The method according to the supplement 57, wherein sub-configurations corresponding to one or more sub-configuration IDs are all activated, or the sub-configurations corresponding to the one or more sub-configuration IDs are all deactivated.

59. The method according to the supplement 48 or 49, wherein the MAC CE includes one or more third fields and one fourth field, one of the third fields is used to indicate one or more sub-configuration IDs of the CSI report configuration ID, the fourth field is used to indicate whether the sub-configuration is activated or deactivated, and the CSI report configuration ID is predefined or pre-configured and includes a plurality of sub-configurations.

60. The method according to the supplement 59, wherein the fourth field is 1 bit;

one value of the fourth field indicates that sub-configurations corresponding to the one or more sub-configuration IDs are all activated, and another value indicates that the sub-configurations corresponding to the one or more sub-configuration IDs are all deactivated.

61. The method according to the supplement 48 or 49, wherein the MAC CE includes one first field and one or more third fields, the one first field is used to indicate one CSI report configuration ID, one of the third fields is used to indicate one sub-configuration ID of the CSI report configuration ID, and the CSI report configuration ID is predefined or pre-configured and includes a plurality of sub-configurations.

62. The method according to the supplement 61, wherein sub-configurations corresponding to the one or more sub-configuration IDs are all activated, or the sub-configurations corresponding to the one or more sub-configuration IDs are all deactivated.

63. The method according to any one of the supplements 55 to 62, wherein the MAC CE includes or corresponds to a plurality of first fields and a plurality of third fields, one of the first fields is used to indicate one CSI report configuration ID, one of the third fields is used to indicate one sub-configuration ID of the CSI report configuration ID, and one CSI report configuration ID corresponds to one or more sub-configuration IDs,

wherein sub-configurations of a plurality of CSI report configuration IDs are indicated as being activated or deactivated by one fourth field, or the sub-configurations of the plurality of CSI report configuration IDs are defaulted as being activated or deactivated.

64. The method according to any one of the supplements 48 to 63, wherein the MAC CE further includes one or more fifth fields for indicating whether the CSI report configuration is activated.

65. A terminal equipment including a memory storing a computer program and a processor configured to execute the computer program to implement the method for indicating a channel state information report configuration according to any one of the supplements 1 to 32.

66. A network device including a memory storing a computer program and a processor configured to execute the computer program to implement the method for indicating a channel state information report configuration according to any one of the supplements 33 to 64.

**Claims**

1. An apparatus for indicating a channel state information report configuration, comprising:

    a first receiving unit configured to receive first information from a network device, the first information at least comprising L sub-configurations of a channel state information report configuration, and one of the L sub-configurations corresponding to one piece of channel state information; and
    a second receiving unit configured to receive second information from the network device, the second information being at least used for indicating and/or triggering and/or activating at least one of the L sub-configurations.

2. The apparatus according to claim 1, wherein the apparatus further comprises:
   a transmitting unit configured to transmit to the network device channel state information reporting corresponding to at least one indicated and/or triggered and/or activated sub-configuration according to the first information and/or the second information.

3. The apparatus according to claim 1, wherein the first information is carried by radio resource control signaling; the channel state information report configuration is for physical uplink control channel (PUCCH) based semi-persistent channel state information reporting.

4. The apparatus according to claim 1, wherein one sub-configuration of the L sub-configurations at least comprises a sub-configuration index/ID to represent the one sub-configuration,
   wherein a sub-configuration to which a minimum value of an index/ID corresponds is a reference sub-configuration, and the reference sub-configuration corresponds to at least: the maximum number of ports, and/or a *nrOfport* value in a CSI-RS resource configuration, and/or a *powerControlOffset* value in a CSI-RS resource configuration.

5. The apparatus according to claim 1, wherein one of the L sub-configurations comprises at least a first parameter, wherein the first parameter comprises Type 1 spatial-domain adaptation related parameters and/or Type 1 energy-domain adaptation related parameters;
or one of the L sub-configurations comprises at least a second parameter, wherein the second parameter comprises Type 2 spatial-domain adaptation related parameters or Type 2 energy-domain adaptation related parameters.

6. The apparatus according to claim 1, wherein the second information is carried by an MAC CE, and
the second information comprises an LCID with a codepoint or an index greater than or equal to 35 and less than or equal to 46, or the second information comprises an eLCID with a codepoint greater than or equal to 0 and less than or equal to 226 and/or an index greater than or equal to 64 and less than or equal to 290.

7. The apparatus according to claim 6, wherein the MAC CE comprises one first field and one or more second fields, wherein the first field is used to indicate a channel state information report configuration identifier, and the second field is used to indicate whether one sub-configuration of the channel state information report configuration identifier is indicated/triggered/activated.

8. The apparatus according to claim 7, wherein a width of the one first field is Y bits; one of the second fields is 1 bit; the number of the one or more second fields is less than or equal to the number of sub-configurations of the channel state information report configuration identifier, and the second fields correspond sequentially to the sub-configurations of the channel state information report configuration identifier in order of indexes; wherein one value of one of the second fields indicates that a corresponding sub-configuration is activated, while another value thereof indicates that the corresponding sub-configuration is deactivated.

9. The apparatus according to claim 6, wherein the MAC CE comprises one or more second fields, wherein one of the second fields is used to indicate whether one sub-configuration of a channel state information report configuration identifier is activated,
wherein one of the second fields is 1 bit; the number of the one or more second fields is less than or equal to the number of sub-configurations of the channel state information report configuration identifier, and the second fields correspond sequentially to sub-configurations of channel state information report configuration identifiers in order of indexes; wherein one value of one of the second fields indicates that a corresponding sub-configuration is activated, while another value thereof indicates that the corresponding sub-configuration is deactivated.

10. The apparatus according to claim 7, wherein the MAC CE comprises a plurality of first fields and a plurality of second fields, wherein the plurality of first fields are used to indicate a plurality of channel state information report configuration identifiers, and sub-configurations of channel state information report configuration identifiers are indicated as being activated or deactivated by respective second fields.

11. The apparatus according to claim 6, wherein the MAC CE comprises one first field, one or more third fields and one fourth field, wherein the first field is used to indicate a channel state information report configuration identifier, one of the third fields is used to indicate a sub-configuration identifier of the channel state information report configuration identifier, and the fourth field is used to indicate whether the sub-configuration is activated or deactivated,
wherein the fourth field is 1 bit; one value of the fourth field indicates that sub-configurations corresponding to one or more sub-configuration identifiers are all activated, and another value indicates that the sub-configurations corresponding to the one or more sub-configuration identifiers are all deactivated.

12. The apparatus according to claim 6, wherein the MAC CE comprises one first field and one or more third fields, wherein the first field is used to indicate a channel state information report configuration identifier, and one of the third fields is used to indicate a sub-configuration identifier of the channel state information report configuration identifier.

13. The apparatus according to claim 12, wherein sub-configurations corresponding to one or more sub-configuration identifiers are all activated, or the sub-configurations corresponding to one or more sub-configuration identifiers are all deactivated.

14. The apparatus according to claim 6, wherein the MAC CE comprises one or more third fields and one fourth field, wherein one of the third fields is used to indicate one or more sub-configuration identifiers of a channel state information report configuration identifier, the fourth field is used to indicate whether a sub-configuration is activated or deactivated, and the channel state information report configuration identifier is predefined or pre-configured and comprises a plurality of sub-configurations.

15. The apparatus according to claim 14, wherein the fourth field is 1 bit; one value of the fourth field indicates that sub-configurations corresponding to the one or more sub-configuration identifiers are all activated, and another value indicates that the sub-configurations corresponding to the one or more sub-configuration identifiers are all deactivated.

16. The apparatus according to claim 6, wherein the MAC CE comprises one first field and one or more third fields, wherein the one first field is used to indicate one channel state information report configuration identifier, one of the third fields is used to indicate one sub-configuration identifier of a channel state information report configuration identifier, and the channel state information report configuration identifier is predefined or pre-configured and comprises a plurality of sub-configurations; and sub-configurations corresponding to one or more sub-configuration identifiers are all activated, or sub-configurations corresponding to one or more sub-configuration identifiers are all deactivated.

17. The apparatus according to claim 6, wherein the MAC CE comprises or corresponds to a plurality of first fields and a plurality of third fields, wherein one of the first fields is used to indicate one channel state information report configuration identifier, one of the third fields is used to indicate one sub-configuration identifier of the channel state information report configuration identifier, and one channel state information report configuration identifier corresponds to one or more sub-configuration identifiers, wherein sub-configurations of a plurality of channel state information report configuration identifiers are indicated as being activated or deactivated by one fourth field, or sub-configurations of a plurality of channel state information report configuration identifiers are defaulted as being activated or deactivated.

18. The apparatus according to claim 6, wherein the MAC CE further comprises one or more fifth fields for indicating whether the channel state information report configuration is activated.

19. An apparatus for indicating a channel state information report configuration, comprising:

a first transmitting unit configured to transmit first information to a terminal equipment, the first information at least comprising L sub-configurations of a channel state information report configuration, and one of the L sub-configurations corresponding to one piece of channel state information; and
a second transmitting unit configured to transmit second information to the terminal equipment, the second information being at least used for indicating and/or triggering and/or activating at least one of the L sub-configurations.

20. A communication system, comprising:

a network device configured to transmit first information, the first information at least comprising L sub-configurations of a channel state information report configuration, and one of the L sub-configurations corresponding to one piece of channel state information; and transmit second information, the second information being at least used for indicating and/or triggering and/or activating at least one of the L sub-configurations;
a terminal equipment configured to receive the first information and/or the second information.

**100**

**Fig. 1**

| R | Serving Cell ID | | | | | BWP ID | | Oct 1 |
|---|---|---|---|---|---|---|---|---|
| R | R | R | R | $S_3$ | $S_2$ | $S_1$ | $S_0$ | Oct 2 |

**Fig. 2**

ON/OFF adaption          ON/OFF adaption

**Fig. 3**

401

a terminal equipment receives first information from a network device, the first information at least including L sub-configurations of a CSI reporting configuration, and one of the L sub-configurations corresponding to one piece of CSI

402

the terminal equipment receives second information from the network device, the second information being at least used for indicating and/or triggering and/or activating at least one of the L sub-configurations

**Fig. 4**

| R | Serving Cell ID | | BWP ID | |
|---|---|---|---|---|

| R | R | R | CSI report config ID | S3 | S2 | S1 | S0 |
|---|---|---|---|---|---|---|---|

**Fig. 5**

| R | Serving Cell ID | | BWP ID | |
|---|---|---|---|---|

| R | CSI report config ID | R | R | S3 | S2 | S1 | S0 |
|---|---|---|---|---|---|---|---|

**Fig. 6**

| R | Serving Cell ID | | | | | BWP ID | |
|---|---|---|---|---|---|---|---|
| R | CSI report config ID | S6 | S5 | S3 | S2 | S1 | S0 |

**Fig. 7**

| R | Serving Cell ID | | | | | BWP ID | |
|---|---|---|---|---|---|---|---|
| CSI report config ID 0 | R | R | R | S3,0 | S2,0 | S1,0 | S0,0 |
| CSI report config ID 1 | R | R | R | S3,1 | S2,1 | S1,1 | S0,1 |
| | | | ...... | | | | |
| CSI report config ID 2 | R | R | R | S3,n | S2,n | S1,n | S0,n |

**Fig. 8**

| A/D | Serving Cell ID | | | BWP ID | |
|---|---|---|---|---|---|
| R | R | R | CSI report config ID | Sub-configuration ID | |
| | | | ...... | | |
| R | Sub-configuration ID | | | Sub-configuration ID | |

**Fig. 9**

| A/D | Serving Cell ID | | BWP ID |
|---|---|---|---|
| R | CSI report config ID 0 | Sub-config ID,0 | Sub-config ID,0 |
| Sub-config ID,0 | | Sub-config ID,0 | Sub-config ID,0 |
| R | CSI report config ID 1 | Sub-config ID,1 | Sub-config ID,1 |
| Sub-config ID,0 | | Sub-config ID,1 | Sub-config ID,1 |
| ...... | | | |
| R | CSI report config ID n | Sub-config ID,n | Sub-config ID,n |
| Sub-config ID,n | | Sub-config ID,n | Sub-config ID,n |

**Fig. 10**

| R | Serving Cell ID | | | | BWP ID | |
|---|---|---|---|---|---|---|
| R | R | R | R | S3 | S2 | S1 | S0 |
| R | R | CSI report config ID | | P3 | P2 | P1 | P0 |

**Fig. 11**

| Network device | | Terminal equipment |
|---|---|---|

1201, first information

1202, second information

1203, CSI reporting

# Fig. 12

1300

apparatus for indicating
CSI report configuration

1301

| First receiving unit |

1302

| Second receiving unit |

1303

| Transmitting unit |

# Fig. 13

1400

apparatus for indicating
CSI report configuration

1401

First transmitting
unit

1402                              1403

Second transmitting
unit                              Receiving unit

**Fig. 14**

1500

Network device                    1550

1520                    1510

Memory

1530                    Processor        1540

Program                                Transceiver

**Fig. 15**

1600

**Terminal equipment**

1640 — Input unit

1610

1630

communication module
(transmitter/receiver)

Processor

**Memory**

Buffer

1620 — Application/function

Data

Program

Display — 1650

Power supply — 1660

# Fig. 16

## INTERNATIONAL SEARCH REPORT

| | International application No. |
|---|---|
| | **PCT/CN2023/112562** |

| A. | CLASSIFICATION OF SUBJECT MATTER |
|---|---|

H04W72/231(2023.01)i

According to International Patent Classification (IPC) or to both national classification and IPC

| B. | FIELDS SEARCHED |
|---|---|

Minimum documentation searched (classification system followed by classification symbols)

IPC:H04W,H04B

Documentation searched other than minimum documentation to the extent that such documents are included in the fields searched

Electronic data base consulted during the international search (name of data base and, where practicable, search terms used)

CNTXT, VCN, DWPI, CNKI, 3GPP: 信道状态信息, 子, 配置, 设置, 上报, 报告, 激活, 触发, 指示, 节能, CSI, sub, configuration, report, indicat+, activate, trigger

| C. | DOCUMENTS CONSIDERED TO BE RELEVANT |
|---|---|

| Category* | Citation of document, with indication, where appropriate, of the relevant passages | Relevant to claim No. |
|---|---|---|
| X | NTT DOCOMO, INC. "Discussion on NW Energy Saving Techniques" *3GPP TSG RAN WG1 #109-E, R1-2204392*, 20 May 2022 (2022-05-20), section 2.3 | 1-20 |
| X | CN 116193600 A (HUAWEI TECHNOLOGIES CO., LTD.) 30 May 2023 (2023-05-30) description, paragraphs 0105-0216 | 1-20 |
| A | WO 2022229925 A1 (LENOVO (SINGAPORE) PTE. LTD.) 03 November 2022 (2022-11-03) entire document | 1-20 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 April 2024** | **15 April 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/112562**

| Patent document cited in search report | | | Publication date (day/month/year) | Patent family member(s) | | | Publication date (day/month/year) |
|---|---|---|---|---|---|---|---|
| CN | 116193600 | A | 30 May 2023 | WO | 2023093352 | A1 | 01 June 2023 |
| WO | 2022229925 | A1 | 03 November 2022 | None | | | |

Form PCT/ISA/210 (patent family annex) (July 2022)